(19) Europäisches Patentamt
European Patent Office
Office européen des brevets

(11) EP 4 696 748 A1

(12) # EUROPEAN PATENT APPLICATION
published in accordance with Art. 153(4) EPC

(43) Date of publication:
**18.02.2026 Bulletin 2026/08**

(21) Application number: **24788482.8**

(22) Date of filing: **08.03.2024**

(51) International Patent Classification (IPC):
***C08L 71/00*** (2006.01) ***C08L 71/02*** (2006.01)
***C08L 83/05*** (2006.01)

(52) Cooperative Patent Classification (CPC):
**C08L 71/00; C08L 71/02; C08L 83/04**

(86) International application number:
**PCT/JP2024/009092**

(87) International publication number:
**WO 2024/214452 (17.10.2024 Gazette 2024/42)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **13.04.2023 JP 2023065629**

(71) Applicant: **SHIN-ETSU CHEMICAL CO., LTD.**
**Tokyo 1000005 (JP)**

(72) Inventor: **YASUDA, Hiroyuki**
**Annaka-shi, Gunma 379-0224 (JP)**

(74) Representative: **Schicker, Silvia**
**Wuesthoff & Wuesthoff**
**Patentanwälte und Rechtsanwalt PartG mbB**
**Schweigerstraße 2**
**81541 München (DE)**

(54) **PERFLUOROPOLYETHER GEL CURABLE COMPOSITION, PERFLUOROPOLYETHER GEL CURED PRODUCT, AND ELECTRONIC COMPONENT SEALED WITH SAID CURED PRODUCT**

(57) The present invention is a curable perfluoropolyether gel composition including the following components (A) to (D): (A) a linear perfluoropolyether compound having two or more alkenyl groups in one molecule, in an amount of 10 to 90 parts by mass; (B) a perfluoropolyether compound having no alkenyl group in a molecule, in an amount of 10 to 90 parts by mass; (C) an organohydrogen polysiloxane having two or more hydrosilyl groups in one molecule, in an effective curing amount; and (D) a hydrosilylation reaction catalyst, in a catalytic amount. This provides a curable perfluoropolyether gel composition that has excellent chemical resistance, low-temperature properties, etc. and that can inhibit bleed out of a plasticizer during a heat resistance test.

[FIG. 1]

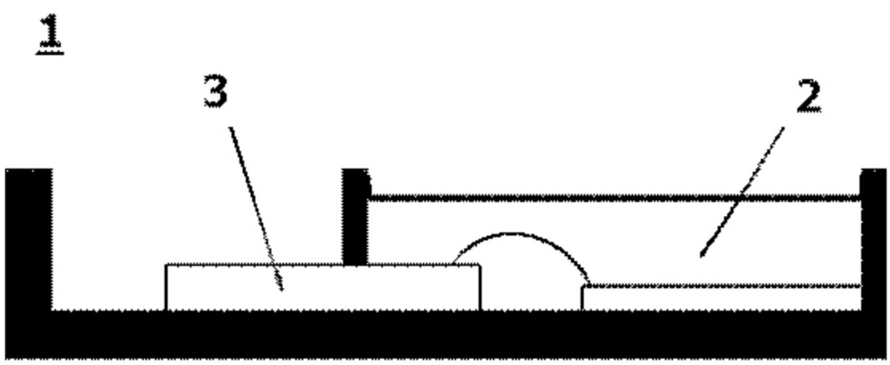


EP 4 696 748 A1

## Description

### TECHNICAL FIELD

The present invention relates to: a curable perfluoropolyether gel composition that yields excellent heat resistance, chemical resistance, low-temperature properties, adhesiveness, etc. after curing, that can inhibit bleed out of a plasticizer during a heat resistance test, and that can be suitably used for improving reliability; a perfluoropolyether gel cured product, obtained by curing the composition; an electronic part sealed with the cured product; etc.

### BACKGROUND ART

A fluorine-containing gel composition is known that contains a divalent perfluoropolyether group having two alkenyl groups in one molecule as a main component, an organohydrogen polysiloxane having a hydrogen atom bonded to a silicon atom, and a platinum-group metallic catalyst. It is reported that such a composition yields a fluoropolyether-type gel cured product having excellent chemical resistance, solvent resistance, and heat resistance by curing (Patent Document 1 and Patent Document 2).

In the above addition-curable fluoropolyether-type gel composition, a perfluoropolyether compound, which is completely fluorinated, may be blended as a plasticizer in order to control penetration. In this plasticizer, hydrocarbon groups in the polymer are typically fluorinated completely. When a fluoropolyether-type gel cured product with particularly high penetration is aimed, there has been a problem that increase in the rate of this plasticizer causes bleed out during a heat resistance test. It is considered that this is because each fluoropolymer has the non-fluorine groups such as the alkenyl group and the SiH group for the hydrosilylation reaction, which relatively decreases compatibility with the plasticizer being the completely fluorinated perfluoropolyether.

### CITATION LIST

### PATENT LITERATURE

Patent Document 1: JP 4098699 B
Patent Document 2: JP 6020327 B

### SUMMARY OF INVENTION

### TECHNICAL PROBLEM

The present invention has been made in view of the above circumstances, and an object of the present invention is to provide: a curable perfluoropolyether gel composition that yields excellent heat resistance, chemical resistance, low-temperature properties, adhesiveness, etc. after curing, that can inhibit bleed out of a plasticizer during a heat resistance test particularly by using a perfluoropolyether compound partially having a hydrocarbon group not completely fluorinated and having no alkenyl group, as a plasticizer, and that can be suitably used for improving reliability; a perfluoropolyether gel cured product, obtained by curing the composition; an electronic part sealed with the cured product; etc.

### SOLUTION TO PROBLEM

To solve the above problem, the present invention provides: a curable perfluoropolyether gel composition comprising the following components (A) to (D); a cured product thereof; an electronic part sealed with the cured product; etc.

(A) a perfluoropolyether compound having at least two alkenyl groups in one molecule and having a perfluoropolyether structure containing a repeating unit of $-C_aF_{2a}O-$ in a main chain, wherein "a" represents an integer of 1 to 6, in an amount of 10 to 90 parts by mass

(B) A perfluoropolyether compound having no alkenyl group in a molecule, that is at least one selected from compounds represented by the following general formulae (1) and (2), in an amount of 10 to 90 parts by mass, provided that a total amount of the component (A) and the component (B) is 100 parts by mass,

$$Rf^1\text{-}C(=O)\text{-}NR_1R_2 \qquad (1)$$

$R_2R_1N\text{-}C(=O)\text{-}Rf^2\text{-}C(=O)\text{-}NR_1R_2$ (2)

wherein $Rf^1$ represents a monovalent perfluoropolyether group, wherein $Rf^2$ represents a divalent perfluoropolyether group, and wherein $R_1$ represents a hydrogen atom or an unsubstituted or substituted monovalent hydrocarbon group having 1 to 15 carbon atoms and having no alkenyl group, and $R_2$ represents an unsubstituted or substituted monovalent hydrocarbon group having 1 to 15 carbon atoms and having no alkenyl group

(C) An organohydrogen polysiloxane having at least two hydrogen atoms bonded to a silicon atom in one molecule, in an effective curing amount

(D) A hydrosilylation reaction catalyst, in a catalytic amount.

The curable perfluoropolyether gel composition comprising the components (A) to (D) as the present invention becomes a curable perfluoropolyether gel composition (a fluorine-containing curable gel composition) that yields excellent heat resistance, chemical resistance, low-temperature properties, adhesiveness, etc. after curing, that can inhibit bleed out of a plasticizer specifically during a heat resistance test, and that can be suitably used for improving reliability.

In addition, the present invention provides a curable perfluoropolyether gel composition, wherein the component (A) is a perfluoropolyether compound represented by the following general formula (3):

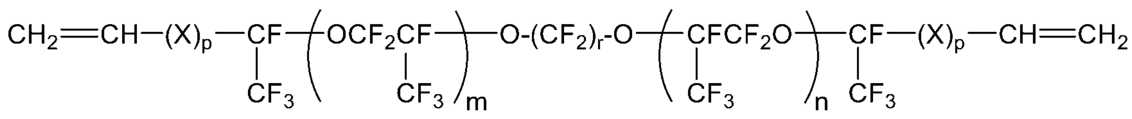

(3)

wherein X represents $-CH_2-$, $-CH_2O-$, $-CH_2OCH_2-$, or $-Y\text{-}NR^1\text{-}CO-$, provided that Y represents $-CH_2-$ or a group represented by the following structural formula (Z) and $R^1$ represents a hydrogen atom, a methyl group, a phenyl group, or an allyl group; X' represents $-CH_2-$, $-OCH_2-$, $-CH_2OCH_2-$, or $-CO\text{-}NR^2\text{-}Y'-$, provided that Y' represents $-CH_2-$ or a group represented by the following structural formula (Z') and $R^2$ represents a hydrogen atom, a methyl group, a phenyl group, or an allyl group; and "p" independently represents 0 or 1, "r" represents an integer of 2 to 6, and "m" and "n" each independently represent an integer, and $m \geq 1$, $n \geq 1$, and $2 \leq m+n \leq 200$:

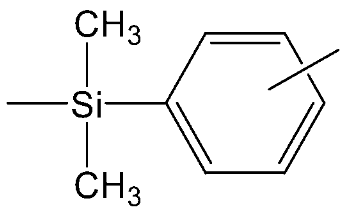

(Z)

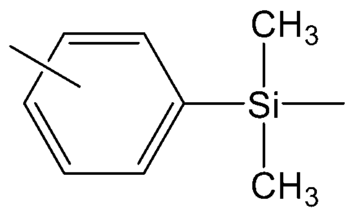

(Z')

The curable perfluoropolyether gel composition comprising the component (A) as above becomes a curable perfluoropolyether gel composition that yields excellent heat resistance, chemical resistance, low-temperature properties, adhesiveness, etc. after curing, that can inhibit bleed out of a plasticizer specifically during a heat resistance test, and that can be suitably used for improving reliability.

In addition, the present invention provides a curable perfluoropolyether gel composition, wherein the perfluoropolyether compound as the component (B) is comprised wherein $Rf^1$ in the general formula (1) is represented by

$F\text{-}[CF(CF_3)CF_2O]_w\text{-}CF(CF_3)-$

wherein "w" represents an integer of 1 to 200; or

wherein the perfluoropolyether compound as the component (B) is comprised wherein $Rf^2$ in the general formula (2) is represented by

$$-CF(CF_3)-[OCF_2CF(CF_3)]_m-O(CF_2)_rO-[CF(CF_3)CF_2O]_n-CF(CF_3)-$$

wherein "r" represents an integer of 2 to 6, "m" and "n" each independently represent an integer, and $m \geq 1$, $n \geq 1$, and $2 \leq m+n \leq 200$.

The curable perfluoropolyether gel composition comprising the component (B) as above becomes a gel composition and a cured product thereof that can prevent bleed out of the plasticizer specifically during heat resistance while keeping the physical properties such as the chemical resistance.

In addition, the present invention provides a curable perfluoropolyether gel composition further comprising, as necessary, a polyfluoromonoalkenyl compound represented by the following general formula (4) as a component (E) as an optional component, $Rf^3-(X^2)_{p'}-CH=CH_2$ (4)

wherein $X^2$ represents $-CH_2-$, $-OCH_2-$, $-CH_2OCH_2-$, or $-CO-NR^2-Y^2-$, provided that $Y^2$ represents $-CH_2-$ or a group represented by the following structural formula ($Z^2$):

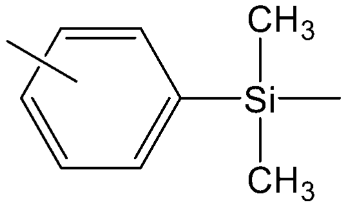

($Z^2$)

(a dimethylphenylsilylene group represented at an ortho-, meta-, or para-position)

wherein $R^2$ represents a hydrogen atom, a methyl group, a phenyl group, or an allyl group, and "p'" represents 0 or 1, and $Rf^3$ represents a perfluoropolyether structure represented by a general formula $F-[CF(CF_3)CF_2O]_{w'}-CF(CF_3)-$, wherein "w'" represents an integer of 1 to 300.

The curable perfluoropolyether gel composition comprising the component (E) as above becomes a gel cured product that has appropriately reduced crosslinking density and that can prevent bleed out of the plasticizer during heat resistance while keeping the physical properties such as the chemical resistance.

In addition, the present invention provides a curable perfluoropolyether gel composition, wherein the component (D) is a catalyst that is activated by heat or light.

The curable perfluoropolyether gel composition comprising the component (D) as above can be applied for use that cannot be heated in curing, for example.

In addition, the present invention provides a perfluoropolyether gel cured product, obtained by curing the above curable perfluoropolyether gel composition.

The perfluoropolyether gel cured product as above is useful as a potting, a material for sealing, a coating material, etc. for an electronic part that has excellent heat resistance, chemical resistance, low-temperature properties, adhesiveness, etc. and that can prevent bleed out of the plasticizer at high temperature.

In addition, the present invention provides an electronic part sealed with the cured product of the curable perfluoropolyether gel composition (that is, the perfluoropolyether gel), specifically a gas-pressure sensor, a liquid-pressure sensor, a temperature sensor, a humidity sensor, a rotation sensor, a G sensor, a timing sensor, an air-flow mater, an electronic circuit, a computer control unit, a voice coil motor, and a semiconductor module.

As above, use of the not completely fluorinated perfluoropolyether compound partially having the hydrocarbon group and having no alkenyl group as a plasticizer can provide: the curable perfluoropolyether gel composition that can inhibit bleed out of the plasticizer during a heat resistance test, that yields excellent chemical resistance, low-temperature properties, adhesiveness, etc., and that can be suitably used for improving reliability; the perfluoropolyether gel cured product, obtained by curing the composition; the electronic part sealed with the cured product; etc.

ADVANTAGEOUS EFFECTS OF INVENTION

As above, the curable perfluoropolyether gel composition of the present invention can provide the curable perfluoropolyether gel composition that yields excellent heat resistance, chemical resistance, low-temperature properties, adhesiveness, etc., that can inhibit bleed out of the plasticizer during a heat resistance test particularly by using a not completely fluorinated perfluoropolyether compound partially having a hydrocarbon group and having no alkenyl group, as

the plasticizer, and that can be suitably used for improving reliability.

BRIEF DESCRIPTION OF DRAWING

[FIG. 1] is a schematic view illustrating an air-flow meter used for a heat shock test.

DESCRIPTION OF EMBODIMENTS

As noted above, there has been a demand for development of: the fluorine-containing curable gel composition that can be suitably used for improving reliability when used as potting, a material for sealing, a coating material, etc. for an electronic part due to its excellent heat resistance, chemical resistance, low-temperature properties, humidity resistance, low gas permeability, etc. after curing, and specifically due to ability to inhibit bleed out of the plasticizer during a heat resistance test; and the electronic part containing the cured product thereof.

The present inventors have made earnest study to achieve the above object, and consequently found that the specific perfluoropolyether gel composition according to the present invention yields the perfluoropolyether gel composition that can inhibit bleed out of the plasticizer during the heat resistance test compared with conventional fluorine-containing gel compositions and that leads to improvement of reliability. This finding has led to the present invention.

Specifically, the present invention provides: a curable perfluoropolyether gel composition including the following components (A) to (D); a cured product thereof; an electronic part sealed with the cured product; etc.

(A) A perfluoropolyether compound having at least two alkenyl groups in one molecule and having a perfluoropolyether structure containing a repeating unit of $-C_aF_{2a}O-$ in a main chain, wherein "a" represents an integer of 1 to 6, in an amount of 10 to 90 parts by mass;

(B) A perfluoropolyether compound having no alkenyl group in a molecule, that is at least one selected from compounds represented by the following general formulae (1) and (2), in an amount of 10 to 90 parts by mass, provided that a total amount of the component (A) and the component (B) is 100 parts by mass,

$$Rf^1\text{-}C(=O)\text{-}NR_1R_2 \qquad (1)$$

$$R_2R_1N\text{-}C(=O)\text{-}Rf^2\text{-}C(=O)\text{-}NR_1R_2 \qquad (2)$$

wherein $Rf^1$ represents a monovalent perfluoropolyether group, wherein $Rf^2$ represents a divalent perfluoropolyether group, and wherein $R_1$ represents a hydrogen atom or an unsubstituted or substituted monovalent hydrocarbon group having 1 to 15 carbon atoms and having no alkenyl group, and $R_2$ represents an unsubstituted or substituted monovalent hydrocarbon group having 1 to 15 carbon atoms and having no alkenyl group;

(C) An organohydrogen polysiloxane having at least two hydrogen atoms bonded to a silicon atom in one molecule, in an effective curing amount

(D) A hydrosilylation reaction catalyst, a catalyst.

Hereinafter, the present invention will be described in detail, but the present invention is not limited thereto.

[Component (A)]

The component (A) contained in the curable perfluoropolyether gel composition of the present invention acts as a main reagent (a base polymer) of the curable perfluoropolyether gel composition of the present invention. The component (A) is a perfluoropolyether compound having at least two alkenyl groups in one molecule and having a perfluoropolyether structure having a repeating unit of $-C_aF_{2a}O-$ in a main chain ("a" represents an integer of 1 to 6), specifically a perfluoropolyether compound having a divalent perfluorooxyalkylene structure.

Here, the perfluorooxyalkylene structure is a structure having many repeating structures of an oxyalkylene unit represented by $-C_aF_{2a}O-$ (wherein "a" in each unit independently represents an integer of 1 to 6), and examples thereof include structures represented by the following general formula (I),

$$-(C_aF_{2a}O)_q- \qquad (I)$$

wherein "q" represents an integer of 50 to 200, preferably an integer of 50 to 190, and more preferably an integer of 50 to 170.

Examples of each repeating structure $-C_aF_{2a}O-$(specifically, the oxyalkylene unit) constituting the perfluorooxyalkylene structure represented by the formula (I) include the following structures. Note that the perfluoroalkyl ether

structure may be constituted with one of these repeating structures singly or may be a combination of two or more thereof.

$-CF_2O-$

$-CF_2CF_2O-$

$-CF_2CF_2CF_2O-$

$-CF(CF_3)CF_2O-$

$-CF_2CF_2CF_2CF_2O-$

$-CF_2CF_2CF_2CF_2CF_2CF_2O-$

$-C(CF_3)_2O-$

Among these, the following structures are particularly preferable.

$-CF_2O-$

$-CF_2CF_2O-$

$-CF_2CF_2CF_2O-$

$-CF(CF_3)CF_2O-$

The alkenyl group in this linear perfluoropolyether compound of the component (A) preferably has 2 to 8 carbon atoms, particularly 2 to 6 carbon atoms, and has a $CH_2=CH-$ structure at the end. For example, groups having the $CH_2=CH-$ structure at the end such as a vinyl group, an allyl group, a propenyl group, an isopropenyl group, a butenyl group, and a hexenyl group are preferable, and a vinyl group, an allyl group, etc. are particularly preferable. This alkenyl group may be directly bonded to both the ends of the perfluoropolyether structure constituting the main chain of the perfluoropolyether compound, specifically the divalent perfluorooxyalkylene structure, or may be bonded via a divalent linking group, for example, $-CH_2-$, $-CH_2O-$, $-CH_2OCH_2-$, or -Y-NR-CO-, provided that Y represents $-CH_2-$ or a group represented by the following structural formula (Z), etc.,

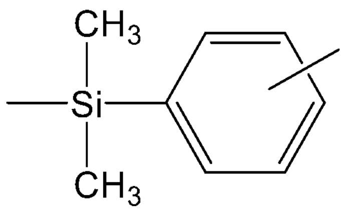
(Z)

(a dimethylphenylsilylene group represented at an ortho-, meta-, or para-position)
wherein R represents a hydrogen atom, a methyl group, a phenyl group, or an allyl group. In addition, the component (A) has at least two alkenyl groups in one molecule.

Examples of the component (A) include a polyfluorodialkenyl compound represented by the following general formula (5) or (6),

$$CH_2=CH-(X)_p-Rf^4-(X')_p-CH=CH_2 \quad (5)$$

$$CH_2=CH-(X)_p-Q-Rf^4-Q-(X')_p-CH=CH_2 \quad (6)$$

wherein X independently represents $-CH_2-$, $-CH_2O-$, $- CH_2OCH_2-$, or $-Y-NR^1-CO-$, provided that Y represents $-CH_2-$or a group represented by the following structural formula (Z), $R^1$ represents a hydrogen atom, a methyl group, a phenyl group, or an allyl group, and X' represents $-CH_2-$, $-OCH_2-$, $-CH_2OCH_2-$, or $-CO-NR^2-Y'-$, provided that Y' represents $-CH_2-$ or a group represented by the following structural formula (Z'), and $R^2$ represents a hydrogen atom, a methyl group, a phenyl group, or an allyl group.

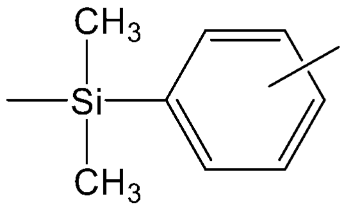

(Z)

(a dimethylphenylsilylene group represented at an ortho-, meta-, or para-position)

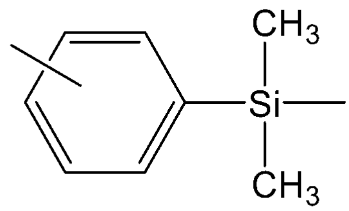

(Z')

(a dimethylsilylphenylene group represented at an ortho-, meta-, or para-position)

Rf[4] represents the divalent perfluoropolyether structure (the perfluorooxyalkylene structure), and is preferably represented by the formula (I), specifically $-[C_aF_{2a}O]_q-$. Q represents a divalent hydrocarbon group having 1 to 15 carbon atoms and optionally having an ether bond, and specifically represents an alkylene group or an alkylene group optionally having an ether bond. "p" independently represents 0 or 1.

As the perfluoropolyether compound of the component (A) as above, compounds represented by the following general formula (3) are particularly preferable,

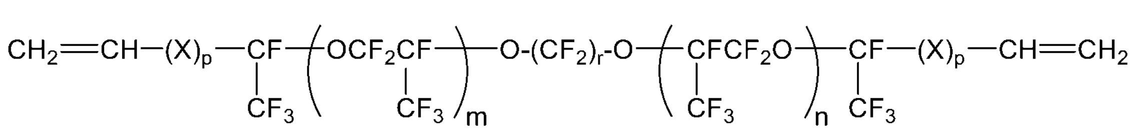

(3)

wherein X, X', and "p" are the same as above, "r" represents an integer of 2 to 6, and "m" and "n" each independently represent an integer, and $m \geq 1$, $n \geq 1$, and $2 \leq m+n \leq 200$.

In the total 100 parts by mass of the component (A) and the component (B), described later, a proportion of the component (A) is 10 to 90 parts by mass, and preferably 15 to 85 parts by mass. This blending amount of less than 10 parts by mass may excessively increase penetration of the resulting composition to exhibit flowability. The blending amount of more than 90 parts by mass may decrease the penetration and cause hardness to deteriorate properties as the gel.

The perfluoropolyether compound of the general formula (3) desirably has a weight-average molecular weight of 3,000 to 100,000, and particularly desirably 4,000 to 50,000. The weight-average molecular weight is in terms of polystyrene in molecular weight distribution measurement by gel permeation chromatography (GPC) analysis with a fluorine-type solvent as a developing solvent. The weight-average molecular weight of 3,000 or more reduces swelling with gasoline and solvents. Specifically, swelling with gasoline becomes 6% or less to satisfy properties as a member requiring gasoline resistance. The weight-average molecular weight of 100,000 or less does not cause excessively high viscosity to yield excellent operability, which is practical.

Note that a value of the polymerization degree (m+n) of the perfluoropolyether compound of the general formula (3) can also be similarly determined as a number-average polymerization degree, a weight-average polymerization degree, or the like in terms of polystyrene in the molecular weight distribution measurement by gel permeation chromatography (GPC) analysis with a fluorine-type solvent as a developing solvent. Note that these number-average polymerization degree and the number-average molecular weight can also be calculated from a ratio between the terminal structures and the repeating unit structures obtained from a $^{19}F$-NMR spectrum.

Specific examples of the linear perfluoropolyether compound represented by the general formula (3) include compounds represented by the following formulae.

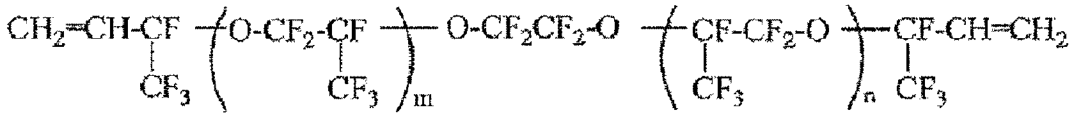

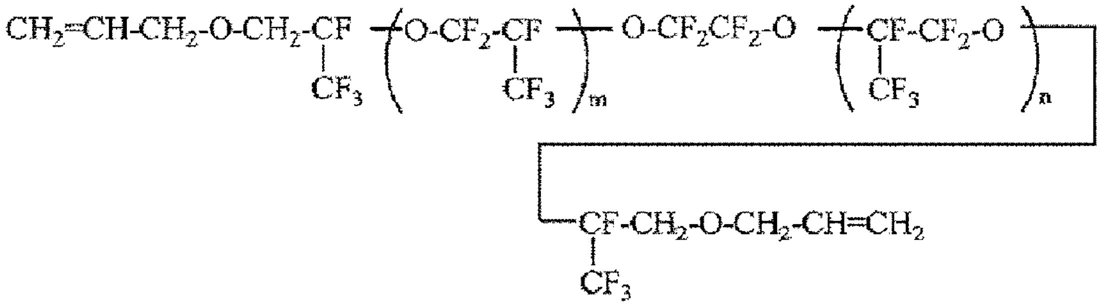

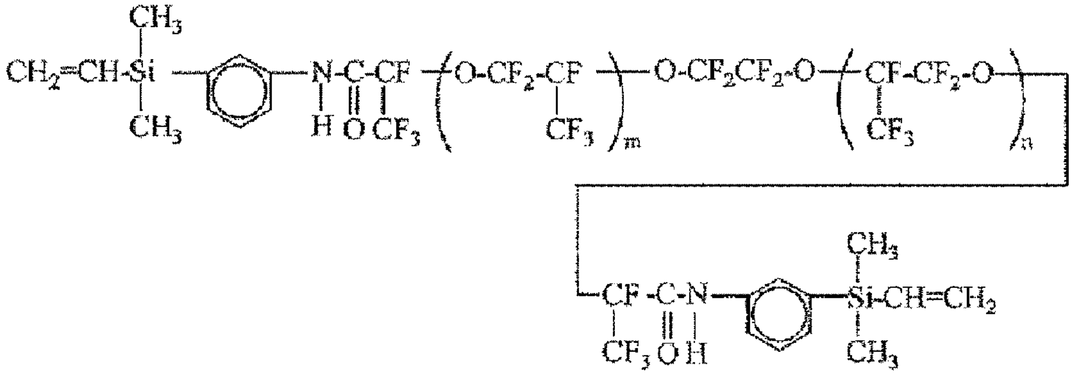

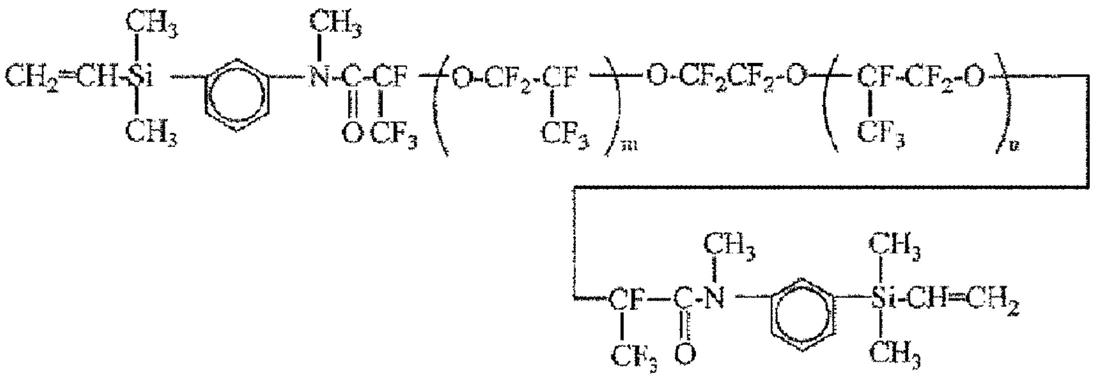

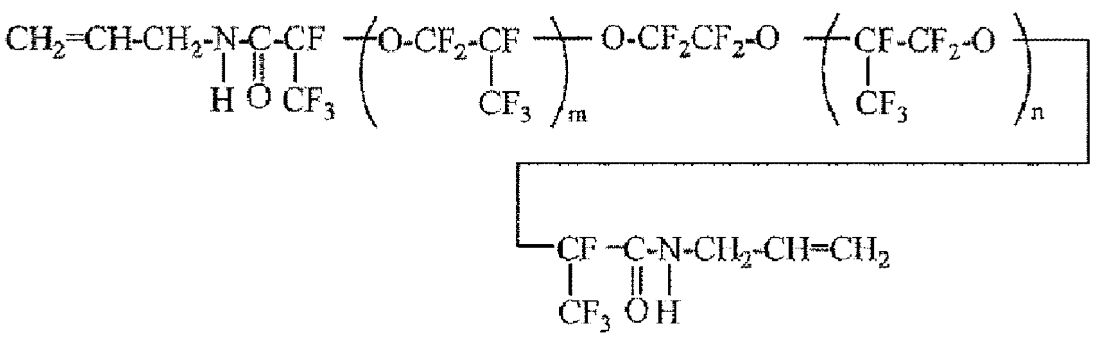

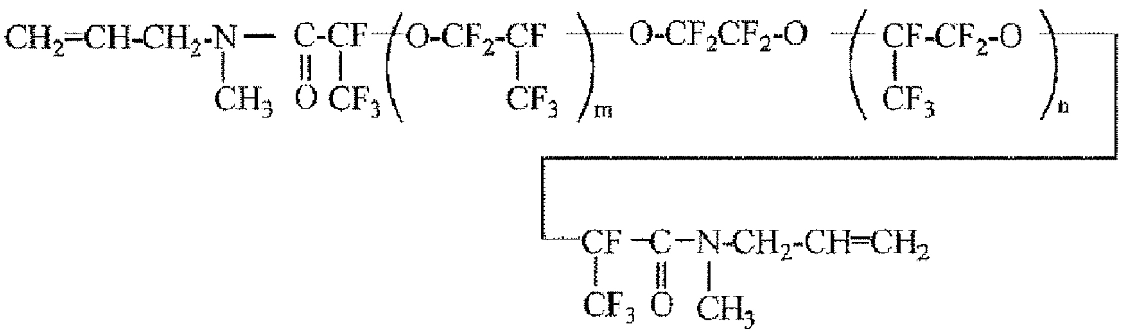

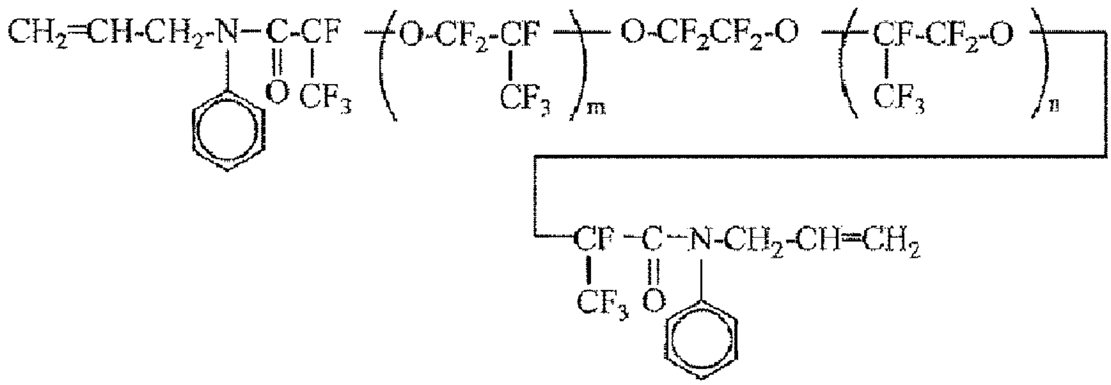

Further, in the present invention, it is acceptable that the perfluoropolyether compound as noted above is subjected in advance to a hydrosilylation reaction with an organosilicon compound having two SiH groups in the molecule by a common method under a common condition, and the chain-extended product is used as the component (A) in order to desirably regulate the weight-average molecular weight of the perfluoropolyether compound of the formula (3) according to an intended purpose. Note that the perfluoropolyether compound of the component (A) may be used singly, or may be used in combination of two or more thereof.

[Component (B)]

The component (B) of the present invention is a perfluoropolyether compound having no alkenyl group in the molecule and having an amide group and a hydrogen atom or an incompletely fluorinated unsubstituted or substituted monovalent hydrocarbon group (specifically, an unsubstituted or substituted monovalent hydrocarbon group except for an alkenyl group, such as: an unsubstituted monovalent hydrocarbon group such as an alkyl group, an aryl group, and an aralkyl group; a partially fluorinated monovalent hydrocarbon group in which hydrogen atoms in the unsubstituted monovalent hydrocarbon group are partially replaced by a fluorine atom; and a monovalent hydrocarbon group substituted with a silalkylene group in which an end is blocked with triorganosiloxy) bonded to a nitrogen atom of the amide group at one end or both ends of the molecular chain. The perfluoropolyether compound blended as a plasticizer yields the composition having excellent chemical resistance and solvent resistance without impairing physical properties, etc. and preventing bleed out of the plasticizer specifically during a heat resistance test.

The component (B) is clearly distinguished from the aforementioned component (A) and components (C) and (E), described later, in that the component (B) does not have an alkenyl group nor a SiH group (a hydrogen atom bonded to a silicon atom), which have reactivity of hydrosilylation, in the molecule.

As the component (B), a perfluoropolyether compound selected from the group consisting of compounds represented by the following general formulae (1) and (2) and having no alkenyl group in the molecule is used:

$$Rf^1\text{-}C(=O)\text{-}NR_1R_2 \qquad (1)$$

$$R_2R_1N\text{-}C(=O)\text{-}Rf^2\text{-}C(=O)\text{-}NR_1R_2 \qquad (2)$$

wherein $Rf^1$ represents a monovalent perfluoropolyether group, $Rf^2$ represents a divalent perfluoropolyether group, $R_1$ represents a hydrogen atom or an unsubstituted or substituted monovalent hydrocarbon group having 1 to 15 carbon atoms and having no alkenyl group, and $R_2$ represents an unsubstituted or substituted monovalent hydrocarbon group having 1 to 15 carbon atoms and having no alkenyl group.

Here, in the general formulae (1) and (2), $R_1$ represents a hydrogen atom or the unsubstituted or substituted monovalent hydrocarbon group represented by $R_2$ having 1 to 15 carbon atoms and having no alkenyl group. Examples of this unsubstituted or substituted monovalent hydrocarbon group having 1 to 15 carbon atoms and having no alkenyl group of $R_1$ and $R_2$ include: unsubstituted monovalent hydrocarbon groups such as linear, branched, or cyclic alkyl groups such as a methyl group, an ethyl group, a propyl group, an isopropyl group, a butyl group, an isobutyl group, a sec-butyl group, a tert-butyl group, a pentyl group, a hexyl group, a cyclohexyl group, a heptyl group, an octyl group, a 2-ethylhexyl group, a nonyl group, a decyl group, an undecyl group, and a dodecyl group, aryl groups such as a phenyl group, a tolyl group, and a xylyl group, and aralkyl groups such as a benzyl group and a phenylethyl group; partially fluorinated monovalent hydrocarbon groups such as a partially fluorinated alkyl group in which hydrogen atoms in the unsubstituted monovalent hydrocarbon groups are partially replaced by a fluorine atom, such as a trifluoroethyl group and a trifluoropropyl group; and monovalent hydrocarbon groups replaced by a terminal triorganosiloxy-blocked silalkylene group such as a phenyl group replaced by a terminal triorganosiloxy-blocked silalkylene group, such as $-C_6H_4-Si(CH_3)_2-CH_2CH_2-Si(CH_3)_2O-Si(CH_3)_3$.

Among these, examples thereof preferably include an ethyl group, a propyl group, a butyl group, a phenyl group, and $-C_6H_4-Si(CH_3)_2-CH_2CH_2-Si\ (CH_3)_2O-Si(CH_3)_3$.

Further, a perfluoropolyether compound is usable in which $Rf^1$ in the general formula (1) of the component (B) is represented by

$$F-[CF(CF_3)CF_2O]_w-CF(CF_3)-$$

wherein "w" represents an integer of 1 to 200; or a perfluoropolyether compound is usable in which $Rf^2$ in the general formula (2) of the component (B) is represented by

$$-CF(CF_3)-[OCF_2CF(CF_3)]_m-O(CF_2)_rO-[CF(CF_3)CF_2O]_n-CF(CF_3)-$$

wherein "r" represents an integer of 2 to 6, "m" and "n" each independently represent an integer, and $m \geq 1$, $n \geq 1$, and $2 \leq m+n \leq 200$.

Specific examples of the general formula (1) of the component (B) include the following compounds. Note that "w", "r", or a sum of "m" and "n" below satisfies the above requirement. Ph represents a phenyl group.

$$F-[CF(CF_3)CF_2O]_w-CF(CF_3)-C(=O)-NH(CH_2CH_2CH_3)$$

$$F-[CF(CF_3)CF_2O]_w-CF(CF_3)-C(=O)-NH(CH_2CH_2CH_2CH_3)$$

$$F-[CF(CF_3)CF_2O]_w-CF(CF_3)-C(=O)-NHPh$$

$$F-[CF(CF_3)CF_2O]_w-CF(CF_3)-C(=O)-N(CH_2CH_3)_2$$

$$F-[CF(CF_3)CF_2O]_w-CF(CF_3)-C(=O)-N(CH_2CH_2CH_3)_2$$

$$F-[CF(CF_3)CF_2O]_w-CF(CF_3)-C(=O)-N(CH_3)Ph$$

$$F-[CF(CF_3)CF_2O]_w-CF(CF_3)-C(=O)-NPh_2$$

wherein "w" represents an integer of 1 to 200, preferably an integer of 2 to 190, more preferably an integer of 5 to 170, and further preferably an integer of 10 to 150.

Specific examples of the general formula (2) of the component (B) include the following compounds. Note that "w", "r", or a sum of "m" and "n" below satisfies the above requirement. Ph represents a phenyl group, and Ph' represents a phenylene group.

$$(CH_3CH_2CH_2)HN-C(=O)-CF\ (CF_3)-[OCF_2CF(CF_3)]_m-O(CF_2)_rO-$$

$$[CF\ (CF_3)CF_2O]_n-CF(CF_3)-C(=O)\ -NH(CH_2CH_2CH_3)$$

$$(CH_3CH_2CH_2CH_2)HN-C(=O)-CF\ (CF_3)-\ [OCF_2CF(CF_3)]\ _m-O(CF_2)_rO-$$

$$[CF\ (CF_3)CF_2O]_n-CF(CF_3)-C\ (=O)\ -NH\ (CH_2CH_2CH_2CH_3)$$

$$PhHN-C\ (=O)\ -CF\ (CF_3)-\ [OCF_2CF(CF_3)]\ _m-O(CF_2)_rO-[CF(CF_3)CF_2O]_n-CF(CF_3)-C(=O)-NHPh$$

$(CH_3CH_2)_2N\text{-}C(=O)\text{-}CF(CF_3)\text{-}[OCF_2CF(CF_3)]_m\text{-}O(CF_2)_rO\text{-}$

$[CF(CF_3)CF_2O]_n\text{-}CF(CF_3)\text{-}C(=O)\text{-}N(CH_2CH_3)_2$

$(CH_3CH_2CH_2)_2N\text{-}C(=O)\text{-}CF(CF_3)\text{-}[OCF_2CF(CF_3)]_m\text{-}O(CF_2)_rO\text{-}$

$[CF(CF_3)CF_2O]_n\text{-}CF(CF_3)\text{-}C(=O)\text{-}N(CH_2CH_2CH_3)2$

$Ph(CH_3)N\text{-}C(=O)\text{-}CF(CF_3)\text{-}[OCF_2CF(CF_3)]_m\text{-}O(CF_2)_rO\text{-}$

$[CF(CF_3)CF_2O]_n\text{-}CF(CF_3)\text{-}C(=O)\text{-}N(CH_3)Ph$

$Ph_2N\text{-}C(=O)\text{-}CF(CF_3)\text{-}[OCF_2CF(CF_3)]_m\text{-}O(CF_2)_rO\text{-}[CF(CF_3)CF_2O]_n\text{-}CF(CF_3)\text{-}C(=O)\text{-}NPh_2$

$(CH_3)_3SiO\text{-}Si(CH_3)_2\text{-}CH_2CH_2\text{-}Si(CH_3)_2\text{-}Ph'\text{-}NH\text{-}C(=O)\text{-}CF(CF_3)\text{-}[OCF_2CF(CF_3)]_m\text{-}O(CF_2)_rO\text{-}[CF(CF_3)CF_2O]_n\text{-}CF(CF_3)\text{-}C(=O)\text{-}NH\text{-}Ph'\text{-}Si(CH_3)_2\text{-}CH_2CH_2\text{-}Si(CH_3)_2O\text{-}Si(CH_3)_3$

wherein "r" represents an integer of 2 to 6, "m" and "n" each independently represent an integer, and $m \geq 1$, $n \geq 1$, preferably $3 \leq m+n \leq 190$, more preferably $4 \leq m+n \leq 170$, and further preferably $5 \leq m+n \leq 150$.

Note that, in the total 100 parts by mass of the component (A) and the component (B), a proportion of the component (B) is 10 to 90 parts by mass, preferably 15 to 85 parts by mass, and more preferably 20 parts by mass or more. This blending amount of less than 10 parts by mass may cause the resulting cured product to be excessively hard to fail to exhibit properties as the gel. The blending amount of more than 90 parts by mass may increase flowability of the cured product.

The component (B) may be used singly, or may be used in combination of two or more thereof.

[Component (C)]

The component (C) acts as a crosslinking agent and/or a chain-extending agent for the component (A) or a component (E), described later. This component (C) is an organohydrogen polysiloxane having at least two, preferably three or more, hydrogen atoms bonded to a silicon atom (hydrosilyl groups represented by SiH) in one molecule. Examples of this component (C) include known organosilicon compounds, and is not particularly limited.

Note that, as the organohydrogen polysiloxane of the component (C), a fluorine-containing organohydrogen polysiloxane having one or more monovalent perfluoroalkyl groups, monovalent perfluorooxyalkyl groups, divalent perfluoroalkylene groups, and/or divalent perfluorooxyalkylene groups in one molecule can be suitably used from the viewpoints of compatibility with the component (A) or the component (E), described later, dispersibility, uniformity of the gel cured product after curing, etc.

Examples of this monovalent or divalent fluorine-containing organic group include a perfluoroalkyl group, a perfluorooxyalkyl group, a perfluoroalkylene group, and a perfluorooxyalkylene group, represented by the following formulae.

$C_gF_{2g+1}\text{-}$

$\text{-}C_gF_{2g}\text{-}$

wherein "g" represents an integer of 1 to 20, and preferably an integer of 2 to 10.

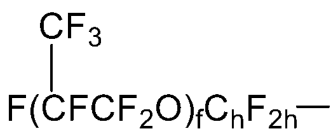

wherein "f" represents an integer of 1 to 200, and preferably an integer of 1 to 100, and "h" represents an integer of 1 to 3.

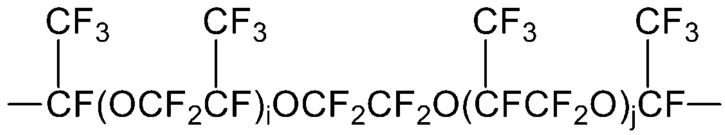

wherein "i" and "j" each represent an integer of 1 or more, preferably an integer of 1 to 100, and an average of i+j is 2 to 200, preferably 2 to 100.

$-(CF_2O)_d-(CF_2CF_2O)_e-CF_2-$

wherein "d" and "e" each represent an integer of 1 to 50, and preferably an integer of 1 to 40.

In addition, these perfluoroalkyl group, perfluorooxyalkyl group, perfluoroalkylene group, or perfluorooxyalkylene group and the silicon atom are preferably linked with a divalent linking group. This divalent linking group may be an alkylene group, an arylene group, a combination thereof, or a group in which an ether-bond oxygen atom, an amide bond, a carbonyl bond, an ester bond, a diorganosilylene group, etc. is interposed between these groups. Examples of the divalent linking group include the following divalent linking group having 2 to 12 carbon atoms, but is not limited thereto.

$-CH_2CH_2-$,

$-CH_2CH_2CH_2-$,

$-CH_2CH_2CH_2OCH_2-$

$-CH_2CH_2CH_2-NH-CO-$,

$-CH_2CH_2CH_2-N(Ph)-CO-$,

$-CH_2CH_2CH_2-N(CH_3)-CO-$,

$-CH_2CH_2CH_2-N(CH_2CH_3)-CO-$,

$-CH_2CH_2-Si(CH_3)_2-Ph'-N(CH_3)-CO-$,

$-CH_2CH_2CH_2-Si(CH_3)_2-Ph'-N(CH_3)-CO-$, and

$-CH_2CH_2CH_2-O-CO-$,

wherein Ph represents a phenyl group, and Ph' represents a phenylene group.

In addition, examples of a monovalent substituent bonded to the silicon atom, other than the monovalent or divalent fluorine-containing organic group and the hydrogen atom bonded to the silicon atom, in this fluorine-containing organohydrogen polysiloxane of the component (C) include: unsubstituted or substituted monovalent hydrocarbon groups having 1 to 20, preferably 1 to 12, carbon atoms such as: alkyl groups such as a methyl group, an ethyl group, a propyl group, a butyl group, a hexyl group, a cyclohexyl group, an octyl group, and a decyl group; alkenyl groups such as a vinyl group and an allyl group; aryl groups such as a phenyl group, a tolyl group, and a naphthyl group; aralkyl groups such as a benzyl group and a phenylethyl group; and groups in which hydrogen atoms in these groups are partially or entirely replaced by a chlorine atom, a cyano group, etc., for example, a chloromethyl group, a chloropropyl group, and a cyanoethyl group.

The fluorine-containing organohydrogen polysiloxane of the component (C) may be any of cyclic, linear, branched, three-dimensional mesh, and a combination thereof. A number of silicon atoms in this fluorine-containing organohydrogen polysiloxane is not particularly limited, and typically 2 to 60, preferably about 3 to 30.

Examples of the component (C) having the monovalent or divalent fluorine-containing organic group and the silicon-atom-bonded hydrogen atom as above include the following compounds. These compounds may be used singly, or may be used in combination of two or more thereof. Note that, in the following formulae, Me represents a methyl group, and Ph represents a phenyl group.

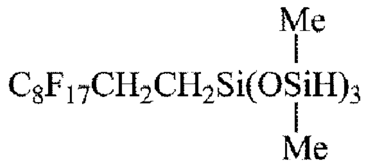

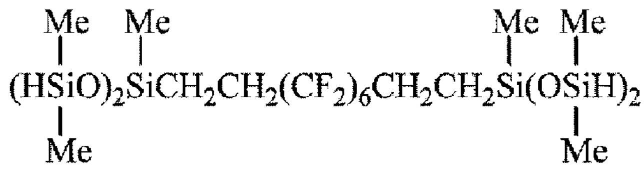

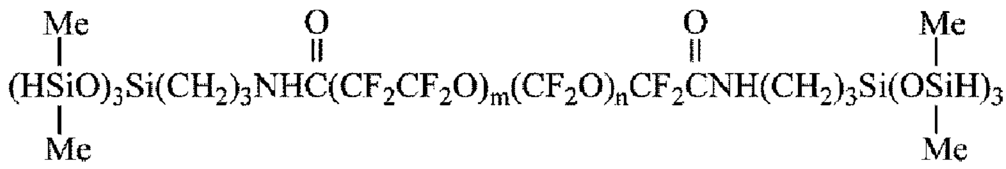

$\overline{m}=10$ , $\overline{n}=6$

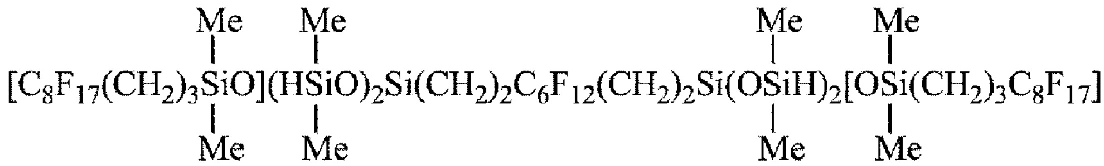

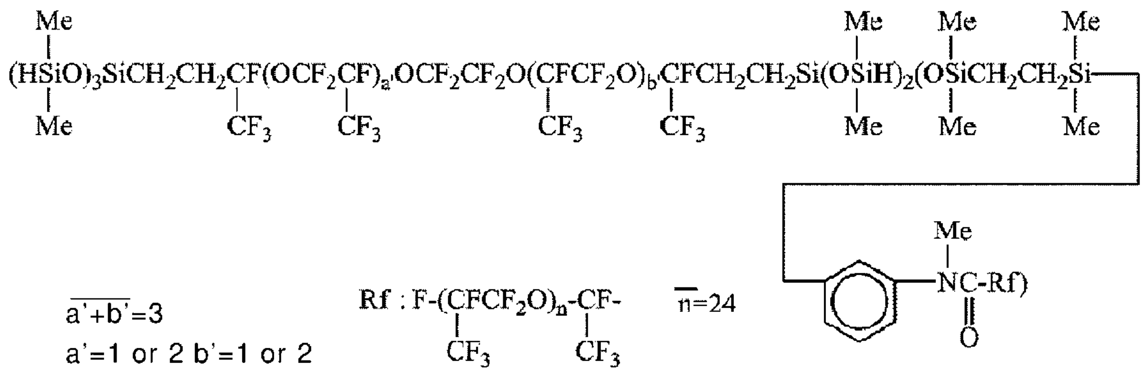

$\overline{a'+b'}=3$

a'=1 or 2 b'=1 or 2

$\overline{n}=24$

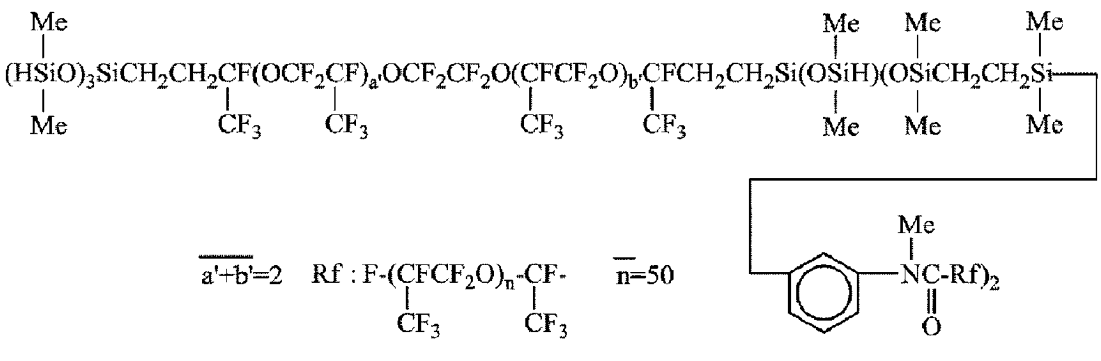

$\overline{a'+b'}=2$

$\overline{n}=50$

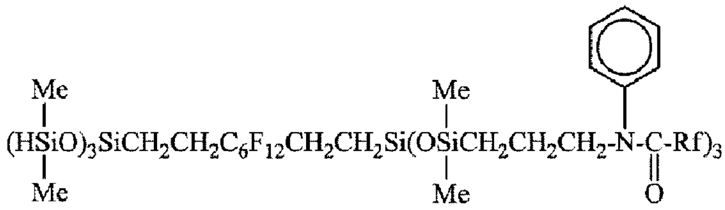

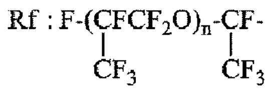 $\overline{n}$=30

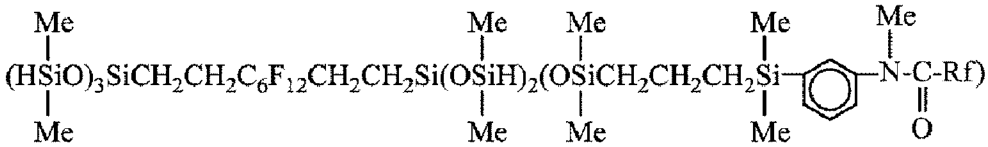

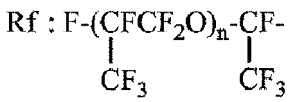 $\overline{n}$=24

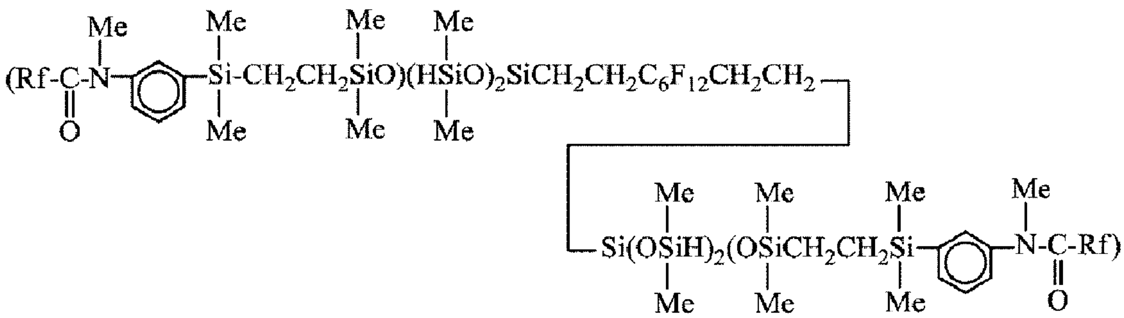

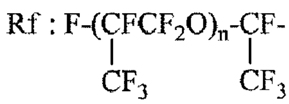 $\overline{n}$=24

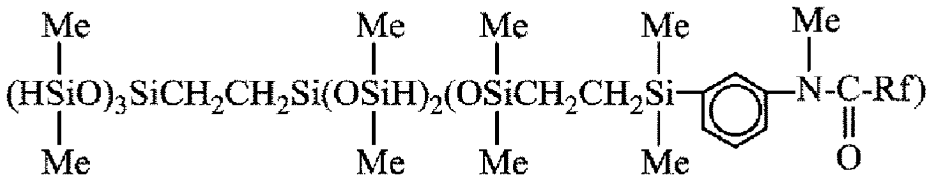

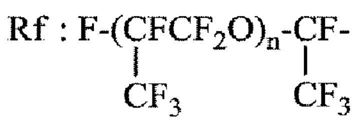 $\overline{n}$=35

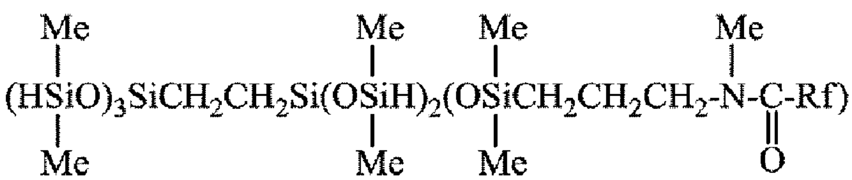

Rf : 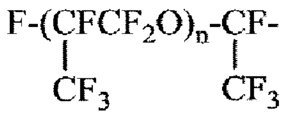 $\overline{n}$=24

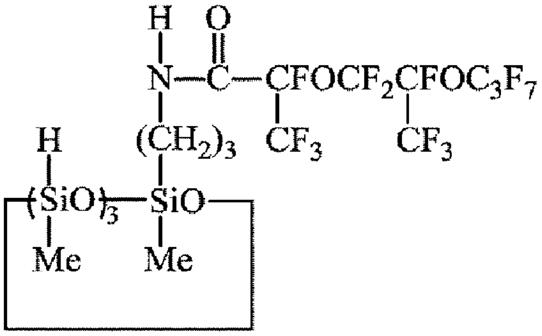

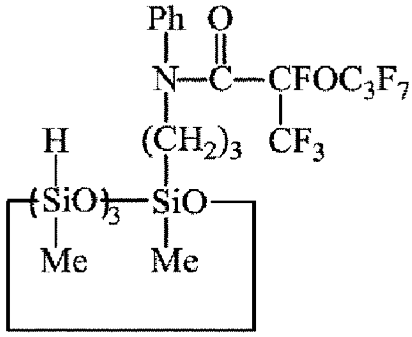

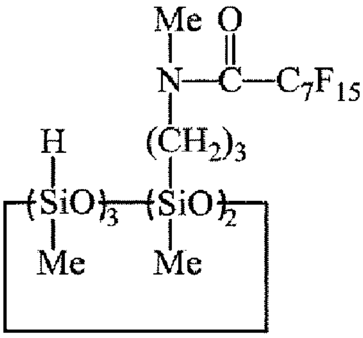

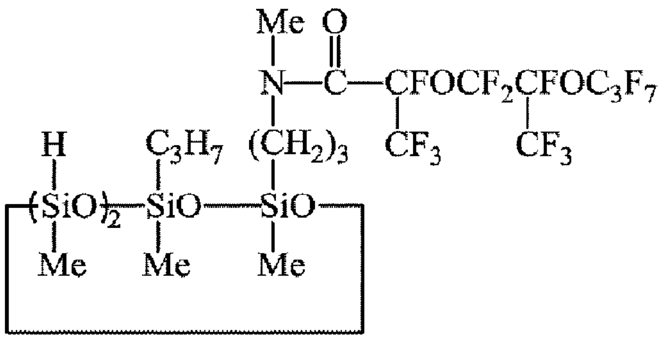

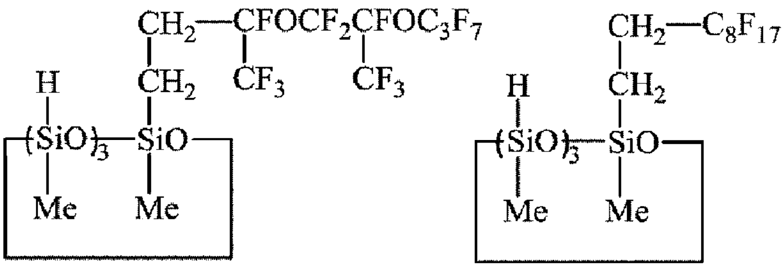

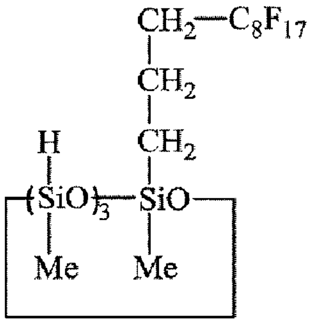

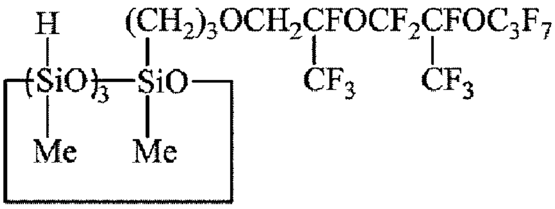

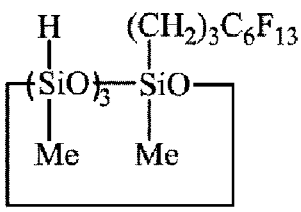

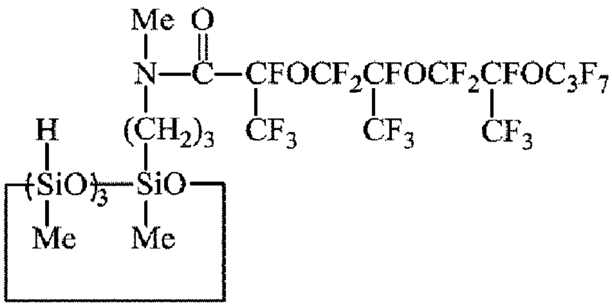

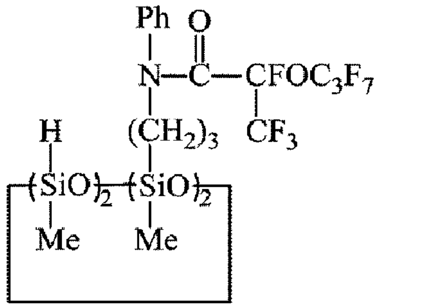

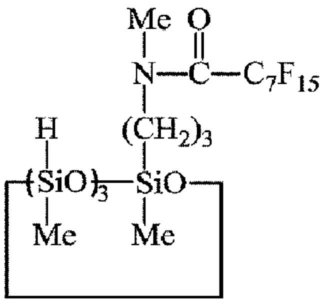

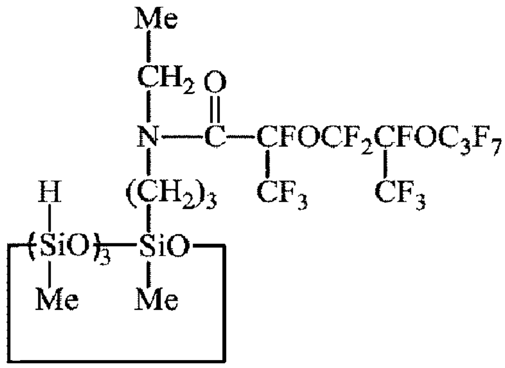

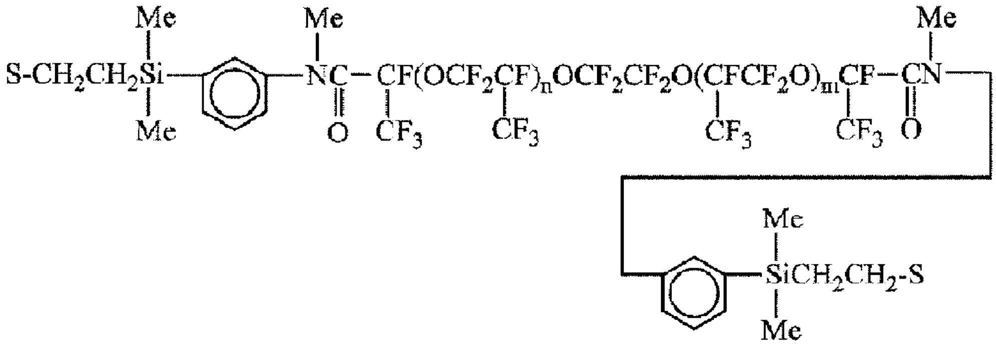

S :

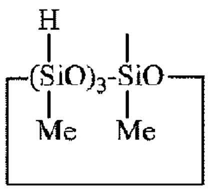

$\overline{n+m}$=2 to 50
n=1 to 50, m=1 to 50

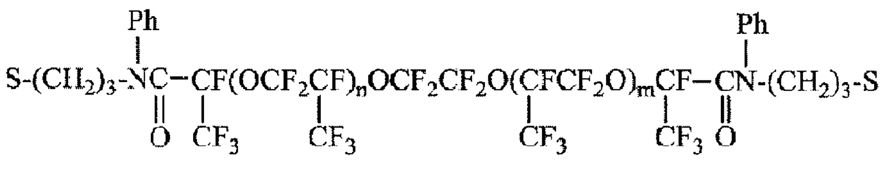

S :

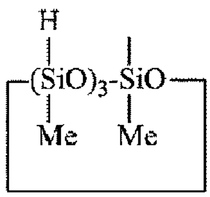

$\overline{n+m}$=2 to 50
n=1 to 50, m=1 to 50

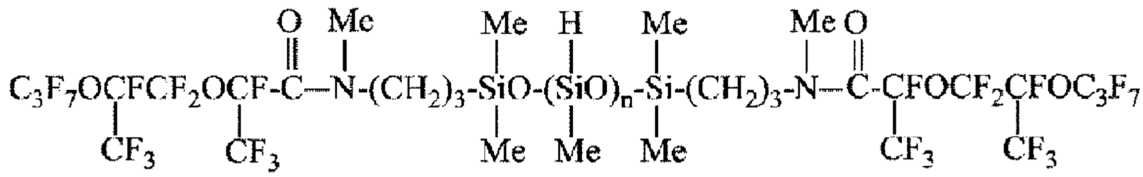

$\bar{n}$=3 to 50

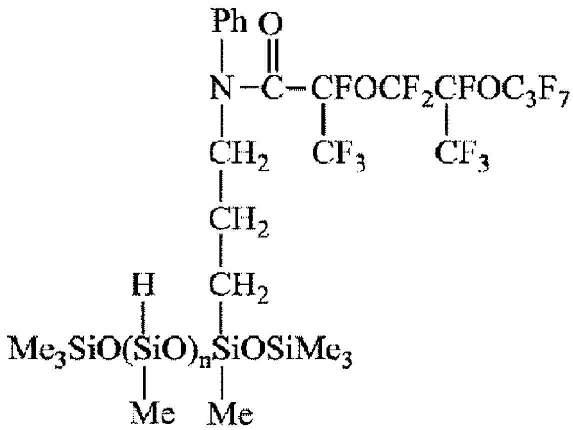

$\bar{n}$=3 to 50

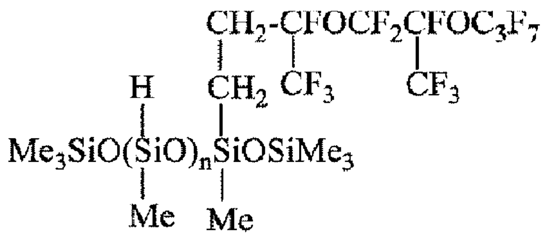

$\bar{n}$=3 to 50

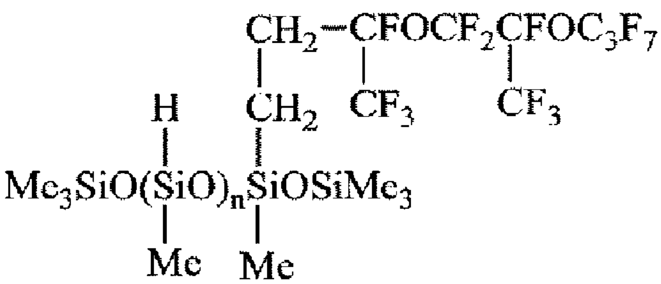

$\bar{n}$=3 to 50

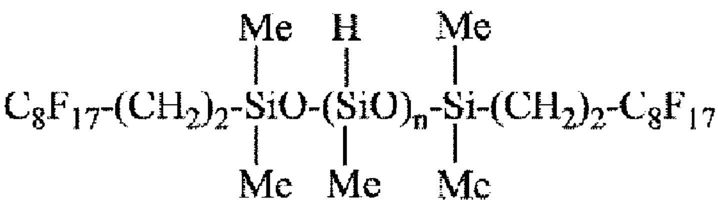

$\bar{n}$=3 to 50

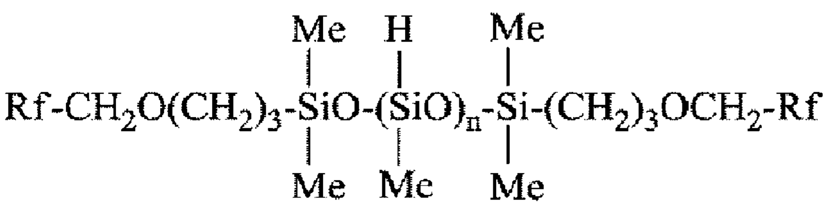

$\bar{n}$=3 to 50

Rf : 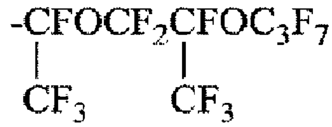

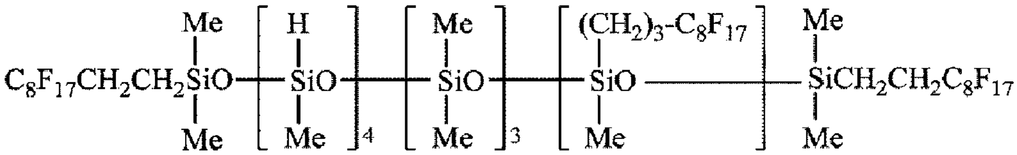

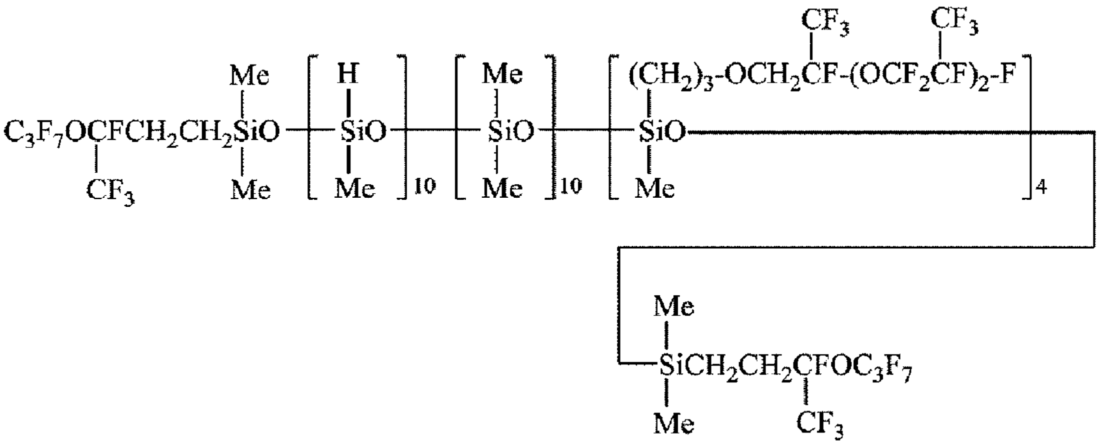

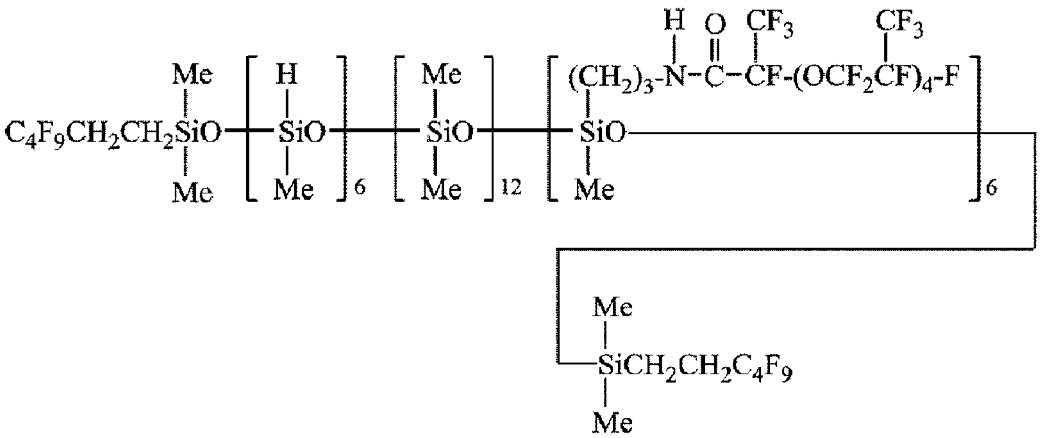

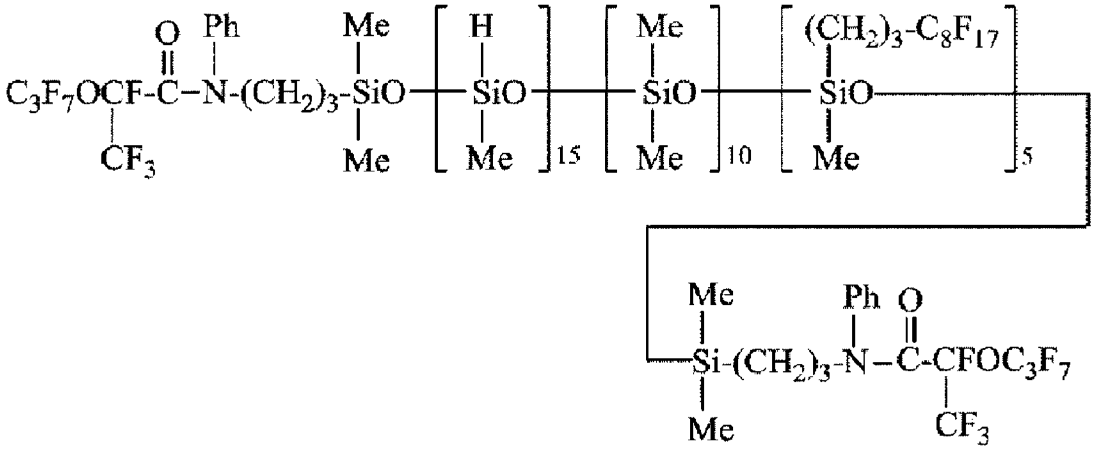

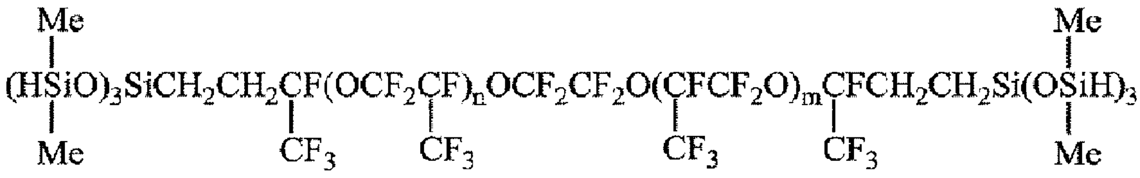

$\overline{n+m}$=2 to 50

n=1 to 50, m=1 to 50

The blending amount of the component (C) is an effective amount for curing the component (A) and the component (E), described later, specifically an effective curing amount. Specifically, the effective curing amount is an amount such that the hydrosilyl groups (Si-H) in the component (C) is preferably 0.2 to 4 mol, and more preferably 0.5 to 3 mol based on 1 mol of the sum of the alkenyl groups in the component (A) and, if present, the component (E) in the present composition. The amount such that the hydrosilyl groups (Si-H) is 0.2 mol or more yields a sufficient crosslinking degree, and does not cause a risk of failure to obtain the cured product. In addition, the amount such that the hydrosilyl groups (Si-H) is 4 mol or less does not cause a risk of foaming during curing.

The component (C) may be used singly, or may be used in combination of two or more thereof.

[Component (D)]

A hydrosilylation reaction catalyst (an addition reaction catalyst) of the component (D) of the present invention is a catalyst that promotes an addition reaction between the alkenyl group in the component (A) or the alkenyl group in the component (E), described later, and the hydrosilyl group in the component (C). This hydrosilylation reaction catalyst is typically a compound of a noble metal (a platinum-group metal), which is expensive. Thus, platinum or a platinum compound, which is relatively easily available, is typically used.

As the platinum catalyst, a compound to be activated by heat or, when there is a process limitation such as low heat resistance of a substrate, a light-activating catalyst may be used.

Examples of the platinum compound to be activated by heat include chloroplatinic acid, a complex between chloroplatinic acid and an olefin such as ethylene, a complex with vinylsiloxane, and a metal platinum supported on silica, alumina, carbon, etc. As the platinum-group metal catalyst other than the platinum compound, rhodium-, ruthenium-, iridium-, and palladium-type compounds are known, and examples thereof include $RhCl(PPh_3)_3$, $RhCl(CO)(PPh_3)_2$, $Ru_3(CO)_{12}$, $IrCl(CO)(PPh_3)_2$, and $Pd(PPh_3)_4$.

The light-activating hydrosilylation reaction catalyst is activated by irradiation with ultraviolet ray at particularly 300 to 400 nm. Examples thereof include ($\eta^5$-cyclopentadienyl)tri($\sigma$-alkyl)platinum complex compounds and $\beta$-diketonato platinum complex compounds. Specific examples thereof include (methylcyclopentadienyl)trimethylplatinum (IV), (cyclopentadienyl)trimethylplatinum (IV), (1,2,3,4,5-pentamethylcyclopentadienyl)trimethylplatinum (IV), (cyclopentadienyl)dimethylethylplatinum (IV), (cyclopentadienyl)dimethylacetylplatinum (IV), (trimethylsilylcyclopentadienyl)trimethylplatinum (IV), (methoxycarbonylcyclopentadienyl)trimethylplatinum (IV), (dimethylphenylsilylcyclopentadienyl)trimethylcyclopenta dienylplatinum (IV), trimethyl(acetylacetonato)platinum (IV), trimethyl(3,5-heptanedionate)platinum (IV), trimethyl(methylacetoacetate)platinum (IV), bis(2,4-pentanedionato)platinum (II), bis(2,4-hexanedionato)platinum (II), bis(2,4-heptanedionato)platinum (II), bis(3,5-heptanedionato)platinum (II), bis(1-phenyl-1,3-butanedionato)platinum (II), bis(1,3-diphenyl-1,3-propanedionato)platinum (II), and bis(hexafluoroacetylacetonato)platinum (II).

Although these catalysts may be used as a solid when the catalyst is a solid catalyst, it is preferable that the catalyst be dissolved in an appropriate solvent and dissolved with the fluoropolyether compound of the component (A) for use in order to obtain more uniform cured product.

The type of the solvent to be used is not particularly limited as long as the solvent can dissolve the catalyst, and use of a solvent in which hydrogen in a hydrocarbon group is partially replaced by fluorine or a mixed solvent between a solvent in which hydrogen in a hydrocarbon group is partially replaced by fluorine and a solvent in which all the hydrogen in a hydrocarbon group is replaced by fluorine is more preferable in terms of ability to more uniformly disperse the catalyst in the composition.

Examples of the solvent in which hydrogen in a hydrocarbon group is partially replaced by fluorine include 1,3-bis(trifluoromethyl)benzene, 1,2-bis(trifluoromethyl)benzene, 1,4-bis(trifluoromethyl)benzene, 1-methyl-3-(pentafluoroethyl)benzene, 1,1,1-trifluoro-3-[3-(trifluoromethyl)phenyl]propan-2-one, methyl 4-fluoro-3-(trifluoromethyl)benzoate, n-butyl heptafluorobutyrate, ethyl 3,5-bis(trifluoromethyl)benzoate, 2-methyl-5-(trifluoromethyl)benzaldehyde, and 2,3-dimethoxybenzotrifluoride.

In addition, examples of the solvent in which all the hydrogen in a hydrocarbon group is replaced by fluorine include octafluorotoluene, (1,1,2,3,3,3-hexafluoropropoxy)perfluorobenzene, pentafluoroethyl 2,2,2-trifluoroethyl ether,

Fluorinert (manufactured by 3M Company), PF5060 (manufactured by 3M Company), and a perfluoropolyether oligomer.

When the catalyst is used as the solution, a preferable mixing ratio between the linear polyfluoro compound of the component (A) and the catalyst solution is within a range of 100 : 0.01 to 1.00 (mass ratio). If the amount of the added catalyst solution is larger than this range, the physical properties of the cured product may be affected. Meanwhile, if the amount is smaller than this range, dispersion failure into the composition may occur. Thus, a concentration of the catalyst solution is appropriately regulated so as to be within this range of the mixing ratio.

A blending amount of the hydrosilylation reaction catalyst may be a catalytic amount, and in typical, the catalyst is preferably blended at a rate of 0.1 to 500 ppm (in terms of mass of the platinum-group metal), and more preferably blended at a rate of 0.1 to 100 ppm based on the total mass of the component (A), the component (E), described later, and the component (C).

The hydrosilylation reaction catalyst of the component (D) may be used singly, or may be used in combination of two or more thereof.

[Component (E)]

The component (E) is an optional component for reducing crosslinking density to reduce a modulus in the curable perfluoropolyether gel composition of the present invention. The component (E) is a polyfluoromonoalkenyl compound having one alkenyl group in one molecule and having a perfluoropolyether structure in the main chain. Specifically, a polyfluoromonoalkenyl compound of the following general formula (4) is preferable,

$$Rf^3\text{-}(X^2)_{p'}\text{-}CH{=}CH_2 \qquad (4)$$

wherein $X^2$ represents $-CH_2-$, $-OCH_2-$, $-CH_2OCH_2-$, or $-CO\text{-}NR^2\text{-}Y^2-$, provided that $Y^2$ represents $-CH_2-$ or a group represented by the following structural formula ($Z^2$), $R^2$ represents a hydrogen atom, a methyl group, a phenyl group, or an allyl group, and "p'" represents 0 or 1, and $Rf^3$ represents a perfluoropolyether structure represented by a general formula $F\text{-}[CF(CF_3)CF_2O]_{w'}\text{-}CF(CF_3)\text{-}$, wherein "w'" represents an integer of 1 to 300.

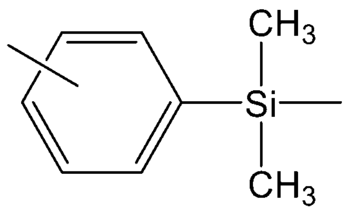

($Z^2$)

(a dimethylphenylsilylene group represented at an ortho-, meta-, or para-position)

Specific examples of the polyfluoromonoalkenyl compound represented by the general formula (4) include the following compounds.

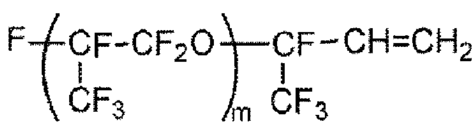

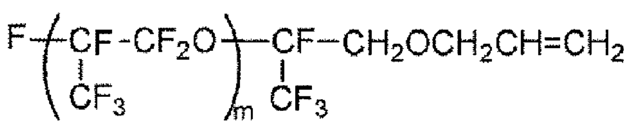

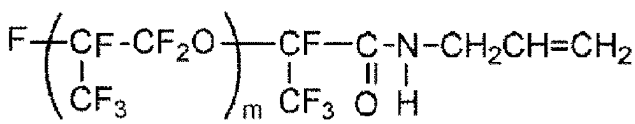

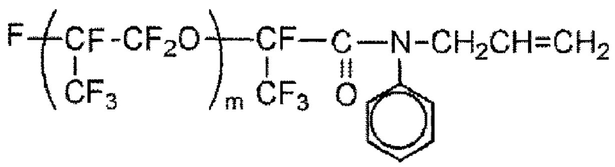

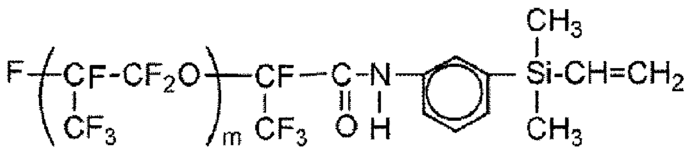

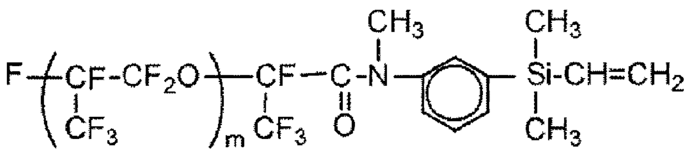

wherein "m" represents an integer of 1 to 200, specifically an integer of 2 to 100.

When the polyfluoromonoalkenyl compound of the formula (4) is blended, the blending amount can be selected to be 0 to 100 parts by mass, preferably 1 to 50, based on 100 parts by mass of the sum of the component (A) and the component (B) in the present composition in the curable perfluoropolyether gel composition.

Note that, the polyfluoromonoalkenyl compound of the component (E) may be used singly, or may be used in combination of two or more thereof.

[Other Components]

In the present composition, compounding agents other than the above components (A) to (E) are optionally added.

[Component (F)]

The component (F) is a controlling agent for the hydrosilylation reaction catalyst (a curing controlling agent), which is an optional component. The component (F) may be added so that the composition does not become viscous or gel before heating curing, for example, during preparation of the composition or during use of the composition. Examples thereof include: 1-ethynyl-1-hydroxycyclohexane, acetylene alcohols such as 3-methyl-1-butyn-3-ol, 3,5-dimethyl-1-hexyn-3-ol, 3-methyl-1-penten-3-ol, and phenylbutynol; 3-methyl-3-penten-1-yne, 3,5-dimethyl-3-hexen-1-yne, or polymethylvinylsiloxane cyclic compounds, and organophosphorus compounds. The addition can appropriately retain curing reactivity and storage stability. Note that the component (F) may be used singly, or may be used in combination of two or more thereof.

A blending amount of the component (F) is within a range of 0 to 5 parts by mass based on 100 parts by mass of the sum of the component (A), the component (B), and the component (E). When the component (F) is blended, the blending amount is preferably within a range of 0.01 to 5 parts by mass, and more preferably within a range of 0.02 to 4 parts by mass. The blending amount of 5 parts by mass or less does not cause a risk of deterioration in curability of the resulting composition.

(Filler)

In addition, examples of an inorganic filler include silica-type fillers such as aerosol silica (fumed silica, dry silica) with untreated surface or hydrophobizing-treated surface, precipitated silica (wet silica), colloidal silica, sol-gel silica, crystalline silica (quartz fine powder), fused silica, and crushed silica, iron oxide, zinc oxide, titanium oxide, calcium carbonate, magnesium carbonate, zinc carbonate, and carbon black. The addition can regulate hardness and mechanical strength of the gel-like cured product obtained from the present composition. A hollow inorganic filler or a rubbery spherical filler can be added.

(Adhesiveness-Imparting Agent)

In addition, known adhesiveness-imparting agents having an epoxy group, an alkoxy group, etc. may be added in order to impart adhesiveness.

(Surfactant)

Further, known surfactants having a fluorine group may be added in order to impart defoaming properties.

Use amounts of these blending components are appropriate according to the properties of the resulting composition and the physical properties of the cured product.

[Cured Product]

The present composition containing the above components can be cured to form a cured product that has excellent solvent resistance, chemical resistance, etc., that can inhibit bleed out of the plasticizer during a heat resistance test, and that can be suitably used for improving reliability.

The cured product in which the thermally activating hydrosilylation reaction catalyst is used can be formed by a conventionally known method such as injecting the present composition into an appropriate mold for curing or applying the present composition on an appropriate substrate and then curing. The curing can be easily performed by a heating treatment at a temperature of typically 60 to 150°C for about 30 to 180 minutes.

The cured product in which the light-activating hydrosilylation reaction catalyst is used can be formed by injecting the present composition into an appropriate mold or applying the present composition on an appropriate substrate and then irradiation with light for curing.

Here, the light for irradiation in the curing is preferably near-ultraviolet ray (hereinafter, which may be simply referred to as ultraviolet ray), and specifically light in which a maximum peak wavelength in an emission spectrum is within a region of 300 to 400 nm and in which radiation illuminance at each wavelength in a wavelength region shorter than 300 nm is 5% or less, preferably 1% or less, more preferably 0.1% or less of radiation illuminance at the maximum peak wavelength, that is, closer to zero is more preferable. Irradiation with light having a wavelength in a wavelength region shorter than 300 nm and having radiation illuminance being more than 5% of the radiation illuminance at the maximum peak wavelength may decompose the polymer terminal group or decompose a part of the catalyst to fail to obtain the sufficient cured product.

The type of activating ray used for curing the light-curable fluoropolyether-type gel composition to obtain the gel is not particularly limited, and ultraviolet ray having the above wavelength is preferable. The ultraviolet ray irradiation dose (the illuminance) is preferably 1,000 to 50,000 mJ/cm$^2$, more preferably 2,000 to 30,000 mJ/cm$^2$, and further preferably 5,000 to 20,000 mJ/cm$^2$ as a cumulative light dose in terms of obtaining good curability. If the ultraviolet ray irradiation dose (the illuminance) is less than the above range, energy sufficient for activating the light-activating hydrosilylation reaction catalyst in the composition cannot be obtained, which may fail to obtain the cured product having sufficient physical properties. Meanwhile, if the ultraviolet ray irradiation dose (the illuminance) is more than the above range, the composition is irradiated with excess energy, which may decompose the polymer terminal group or deactivate a part of the catalyst to fail to obtain the sufficient cured product.

The ultraviolet ray irradiation may be performed with light having a plurality of emission spectra or light having a single emission spectrum. In addition, the single emission spectrum may have a broad spectrum within a region of 300 to 400 nm. The light having the single emission spectrum is light having a peak (namely, the maximum peak wavelength) within a range of 300 to 400 nm, preferably 350 to 380 nm. Examples of a light source that radiates the light as above include an ultraviolet ray emission diode (ultraviolet ray LED) and an ultraviolet ray emission semiconductor element light source such as an ultraviolet ray emission semiconductor laser.

Examples of a light source that radiates the light having a plurality of emission spectra include lamps such as a metal-halide lamp, a xenon lamp, a carbon ark lamp, a chemical lamp, a sodium lamp, a low-pressure mercury lamp, a high-pressure mercury lamp, an ultrahigh-pressure mercury lamp, a gas laser of nitrogen, etc., a liquid laser of an organic pigment solution, and a solid laser in which a rare-earth ion is contained in an inorganic single crystal.

When the light has a peak within a wavelength region shorter than 300 nm in the emission spectrum or when there is a wavelength having radiation illuminance of more than 5% of the radiation illuminance at the maximum peak wavelength within a wavelength region shorter than 300 nm in the emission spectrum (for example, when the emission spectrum is broad over a wide wavelength region), the light at the wavelength within the wavelength region shorter than 300 nm is preferably removed with an optical filter. This can reduce the radiation illuminance at each wavelength within the wavelength region shorter than 300 nm to be 5% or less, preferably 1% or less, more preferably 0.1% or less, and further preferably 0% of the radiation illuminance at the maximum peak wavelength. Note that, when a plurality of peaks are present within the wavelength region of 300 to 400 nm in the emission spectrum, a peak wavelength exhibiting maximum

absorbance among these is the maximum peak wavelength. The optical filter is not particularly limited as long as the optical filter cuts off light at wavelengths shorter than 300 nm, and a known optical filter may be used. For example, a bandpass filter at 365 nm, etc. may be used. Note that the illuminance of the ultraviolet ray and the spectrum distribution may be measured with a spectroradiometer, for example, USR-45D (Ushio Inc.).

The light-irradiation apparatus is not particularly limited. For example, irradiation apparatuses such as a spot-type irradiation apparatus, a surface-type irradiation apparatus, a line-type irradiation apparatus, and conveyer-type irradiation apparatus may be used.

When the light-curable fluoropolyether gel composition is cured, the light irradiation time is, for example, 1 to 300 seconds, preferably 10 to 200 seconds, and more preferably 30 to 150 seconds, although depending on the illuminance of the used light. The composition losses the flowability 1 to 60 minutes after, particularly 5 to 30 minutes after the light irradiation to obtain the gel cured product.

In addition, the environment temperature during the light curing affects the curing time. That is, a low temperature requires a longer time to complete the curing, and conversely, a high temperature requires a shorter time. In terms of utilizing the advantage of light curing, the environment temperature during the curing is preferably 10 to 120°C. A temperature lower than that requires a long time for curing, which is unpreferable in terms of operability. A temperature higher than that may cause thermal deterioration (thermal deformation or thermal discoloration) with some substrates, which is unpreferable.

[Electronic Part]

In addition, examples of the electronic part sealed with the cured product of the present composition include a gas-pressure sensor, a liquid-pressure sensor, a temperature sensor, a humidity sensor, a rotation sensor, a G sensor, a timing sensor, an air-flow mater, an electronic circuit, a voice coil motor, a semiconductor module, and control units such as a computer control unit.

In addition, the cured product used for any one selected from these electronic parts is preferably the gel composition cured by hydrosilylation reaction.

This particularly corresponds to a gel cured with the light-activating catalyst. That is, the electronic part may have a complex part shape with some package designs thereof, and the light irradiation may fail to sufficiently reach the gel composition. For such a concern, the hydrosilylation reaction, which has dark-portion curability, allows the dark portion to be sufficiently cured with time after the light irradiation, which is useful.

Note that the electronic part in the present invention should be interpreted in a broad sense, and encompasses electric parts, electric appliance parts, etc.

EXAMPLE

Hereinafter, the present invention will be specifically described with showing Examples and Comparative Examples, but the present invention is not limited to the following Examples. Note that % in the following examples represents mass%.

[Examples 1 to 4 and Comparative Examples 1 to 4]

The following raw materials were used to prepare curable perfluoropolyether gel compositions shown in Table 1. The gel composition in which a thermally activating hydrosilylation reaction catalyst was used was heated at 150°C for 60 minutes, and the gel composition in which a light-activating hydrosilylation reaction catalyst was used was irradiated at a wavelength of 365 nm and a UV illuminance of 100 mW/cm$^2$ at 23°C for 90 seconds. The cured products were left to stand at 23°C for 24 hours, and then each of the cured products was subjected to penetration, a solvent resistance test, dynamic viscoelasticity measurement, DSC measurement, a heat shock test, and a bleed out test by the following methods. Table 1 also shows the results.

<u>Raw Materials</u>

(A) Linear perfluoropolyether compound

Bifunctional perfluoropolyether (Perfluoropolyether 1)

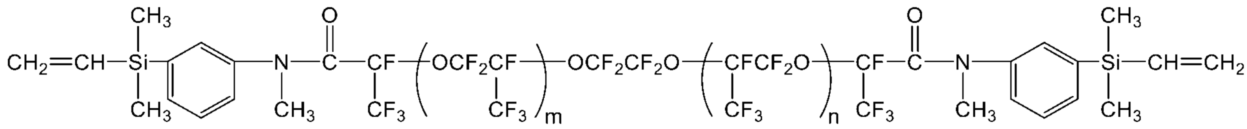

m+n=98

(B) Perfluoropolyether compound

(b-1) Perfluoropolyether 2 (average molecular weight: 4,400)

$F\text{-}[CF(CF_3)CF_2O]_{24}\text{-}CF(CF_3)\text{-}C(=O)\text{-}N(CH_2CH_3)_2$

(w=24)
(b-2) Perfluoropolyether 3 (average molecular weight: 16,830)

$Ph(CH_3)N\text{-}C(=O)\text{-}CF(CF_3)\text{-}[OCF_2CF(CF_3)]_m\text{-}O(CF_2)_2O\text{-}[CF(CF_3)CF_2O]_n\text{-}CF(CF_3)\text{-}C(=O)\text{-}N(CH_3)Ph$

(m+n=98)
(b-3) Perfluoropolyether 4 (average molecular weight: 4,700)

$CF_3O\text{-}(CF_2CF_2CF_2O)_b\text{-}C_2F_5$ (wherein b=27)

(b-4) Perfluoropolyether 5 (average molecular weight: 4,100)

$CF_3O\text{-}[(CF_2O)_d(CF_2CF(CF_3)O)_e]\text{-}CF_3$

(d+e=25, d=1, e=24)

(C) Organohydrogen siloxane

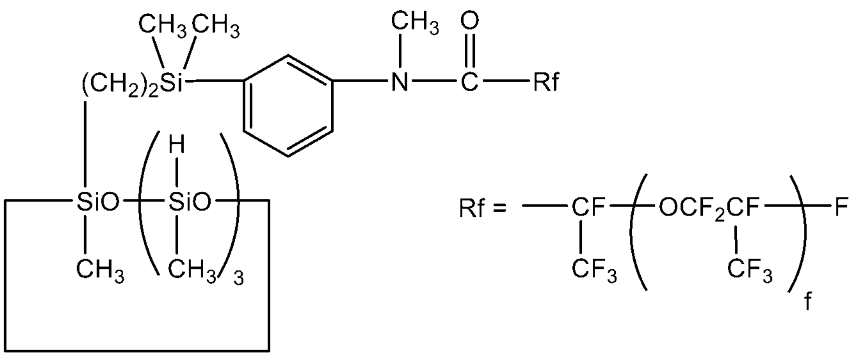

f=24

(D) Addition reaction catalyst:

(d-1) CAT-PL-50T (trade name of Shin-Etsu Chemical Co., Ltd., Platinum compound 1)

(d-2) (Methylcyclopentadienyl)trimethylplatinum (IV) / hexafluorometaxylene = 5%/95% (Platinum compound 2)

(E) Monofunctional perfluoropolyether compound (Perfluoropolyether 6)

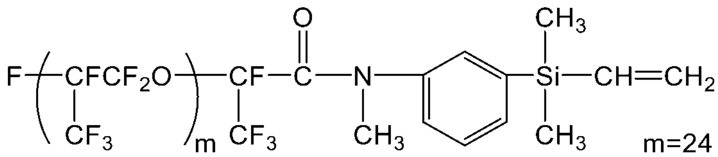

m=24

(F) Curing controlling agent: Ethynylcyclohexanol

Penetration Measurement

Each of the obtained compositions was put into a glass petri dish with φ30×14 mm. The composition in Example 1 was heated at 150°C for 60 minutes, and the compositions in Examples 2 to 4 and Comparative Examples 1 to 4 were irradiated at a wavelength of 365 nm and a UV illuminance of 100 mW/cm$^2$ at 23°C for 90 seconds. The cured products were left to stand at 23°C for 24 hours to produce samples cured under the above conditions, and the penetration was measured. Note that the penetration of the cured product was measured in accordance with ASTM D-1403 with a 1/4 cone.

Solvent Resistance Test (Change in Weight)

A glass container with φ32×15 mm was filled with 3 g of the composition. Then, the composition in Example 1 was heated at 150°C for 60 minutes, and the compositions in Examples 2 to 4 and Comparative Examples 1 and 3 to 4 were irradiated at a wavelength of 365 nm and a UV illuminance of 100 mW/cm$^2$ at 23°C for 90 seconds. The cured products were left to stand at 23°C for 24 hours to produce samples cured under the above conditions. The samples were immersed in xylene at 25°C for seven days, and a changing rate of weight before and after the immersion was measured.

Dynamic Viscoelasticity Measurement

By using a dynamic viscoelasticity measuring apparatus, in Example 1, measurement and curing were performed with a thickness of 1.0 mm, a diameter of 20 mm, a frequency of 1 Hz, a distortion of 10% at 150°C for 60 minutes, and then cooling was performed and a resin modulus (a storage elastic modulus G') at 25°C was measured again under the same condition. In Examples 2 to 4 and Comparative Examples 1 and 3 to 4, curing was performed under a condition of irradiation at a wavelength of 365 nm and a UV illuminance of 100 mW/cm$^2$ at 25°C for 90 seconds and leaving to stand at 25°C for 2 hours, and then a resin modulus (a storage elastic modulus G') at 25°C was measured.

Glass Transition Point Measurement

Of the cured products of each of the compositions other than Comparative Example 2, the glass transition point was determined within a range of -130°C for 25°C (a temperature-rising rate: 5°C/min) with differential scanning calorimetry (DSC).

Heat Shock Test

Each of the compositions other than the Comparative Example 2 was put in an air-flow meter 1 shown in FIG. 1, defoamed under a reduced pressure, cured, and then a cycle at -30°C (1 hour) and 150°C (1 hour) was performed with 1000 cycles. A sample in which no abnormality such as peeling from a substrate was observed was evaluated as "o", and a sample in which peeling was observed was evaluated as "×". Note that the air-flow meter 1 has a detector 3, and each of the compositions 2 was put so that the detector 3 was partially covered.

Bleed Out Test

Each of the obtained compositions was put into a glass petri dish with φ30×14 mm. The composition in Example 1 was heated at 150°C for 60 minutes, and the compositions in Examples 2 to 4 and Comparative Examples 1 and 3 to 4 were irradiated at a wavelength of 365 nm and a UV illuminance of 100 mW/cm$^2$ at 23°C for 90 seconds. The cured products were left to stand at 23°C for 24 hours to produce samples cured under the above conditions, and a heat resistance test was subsequently performed at 150°C for 100 hours. After the test, the cured product surface was checked by touching with

finger. A sample without adhering oil was evaluated as "◦", and a sample with adhering oil was evaluated as "×".

[Table 1]

| Component (parts by mass) | | Example | | | | Comparative Example | | | |
|---|---|---|---|---|---|---|---|---|---|
| | | 1 | 2 | 3 | 4 | 1 | 2 | 3 | 4 |
| A | Perfluoro polyether1 | 30 | 30 | 32 | 30 | 95 | 8 | 32 | 25 |
| b-1 | Perfluoro polyether2 | 70 | 70 | 60 | 30 | 5 | 92 | | |
| b-2 | Perfluoro polyether3 | | | | 40 | | | | |
| b-3 | Perfluoro polyether4 | | | | | | | 60 | |
| b-4 | Perfluoro polyether5 | | | | | | | | 70 |
| E | Perfluoro polyether6 | | | 8 | | | | 8 | 5 |
| C | Organohydrogen siloxane | 4.3 | 4.3 | 7.0 | 4.3 | 13.9 | 1.6 | 9.5 | 6.9 |
| d-1 | Platinum compound1 | 0.10 | | | | | | | |
| d-2 | Platinum compound2 | | 0.05 | 0.05 | 0.05 | 0.05 | 0.05 | 0.05 | 0.05 |
| F | Curing controlling agent | 0.33 | 0.003 | 0.003 | 0.003 | 0.003 | 0.003 | 0.003 | 0.003 |
| Penetration | | 75 | 77 | 70 | 83 | 5 | not cured (flowable) | 77 | 64 |
| Solvent resistance (%) xylene | | 0.7 | 1.0 | 0.8 | 1.3 | 0.2 | | 1.3 | 0.6 |
| Resin modulus (G', kPa, 25°C) | | 2.5 | 2.4 | 2.8 | 1.9 | 190 | | 2.9 | 4.4 |
| Glass transition point (°C) | | -57 | -57 | -55 | -55 | -50 | | -66 | -54 |
| Heat shock test | | ○ | ○ | ○ | ○ | × | | ○ | ○ |
| Bleed out test | | ○ | ○ | ○ | ○ | ○ | | × | × |

As shown in Table 1, the gels in Examples 1 to 4 using the curable perfluoropolyether gel composition of the present invention exhibited good adhesiveness by the heat shock test and caused no bleed out of the plasticizer. In addition, it is found that the cured products obtained in the above Examples have an appropriate degree of the penetration, have flexibility suitable for a potting, etc. of an electronic part, and exhibit sufficient solvent resistance and a low glass transition temperature, thereby having excellent properties of low-temperature properties. Further, the cured products have the resin modulus within an appropriate range, thereby having excellent shape retainability as a gel and adhesiveness to a substrate.

In contrast, Comparative Example 1 in which the component (A) being the essential component of the present invention was excess had high resin modulus to deteriorate the adhesiveness. Comparative Example 2 in which the component (B) being the essential component was excess was not cured and flowable, and exhibited no shape retainability as a gel. In Comparative Examples 3 and 4 in which the completely fluorinated perfluoropolyether was used in the component (B) being the essential component, bleed out of the plasticizer on the gel surface was observed after the heat resistance test.

From the above, it has been found that the present invention can provide the fluorine-containing curable gel composition that has excellent heat resistance, chemical resistance, low-temperature properties, adhesiveness, etc., after curing, that can inhibit bleed out of the plasticizer during the heat resistance test particularly by using the not completely fluorinated perfluoropolyether compound partially having the hydrocarbon group and having no alkenyl group,

as the plasticizer, and that can be suitably used for improving reliability.

The present description includes the following embodiments.

[1]: A curable perfluoropolyether gel composition comprising the following components (A) to (D):

(A) a perfluoropolyether compound having at least two alkenyl groups in one molecule and having a perfluoropolyether structure containing a repeating unit of $-C_aF_{2a}O-$ in a main chain, wherein "a" represents an integer of 1 to 6, in an amount of 10 to 90 parts by mass;

(B) a perfluoropolyether compound having no alkenyl group in a molecule, that is at least one selected from compounds represented by the following general formulae (1) and (2), in an amount of 10 to 90 parts by mass, provided that a total amount of the component (A) and the component (B) is 100 parts by mass,

$Rf^1-C(=O)-NR_1R_2$ (1)

$R_2R_1N-C(=O)-Rf^2-C(=O)-NR_1R_2$ (2)

wherein $Rf^1$ represents a monovalent perfluoropolyether group, wherein $Rf^2$ represents a divalent perfluoropolyether group, and wherein $R_1$ represents a hydrogen atom or an unsubstituted or substituted monovalent hydrocarbon group having 1 to 15 carbon atoms and having no alkenyl group, and $R_2$ represents an unsubstituted or substituted monovalent hydrocarbon group having 1 to 15 carbon atoms and having no alkenyl group;

(C) an organohydrogen polysiloxane having at least two hydrogen atoms bonded to a silicon atom in one molecule, in an effective curing amount; and

(D) a hydrosilylation reaction catalyst, in a catalytic amount.

[2]: The curable perfluoropolyether gel composition according to [1], wherein the component (A) is a perfluoropolyether compound represented by the following general formula (3):

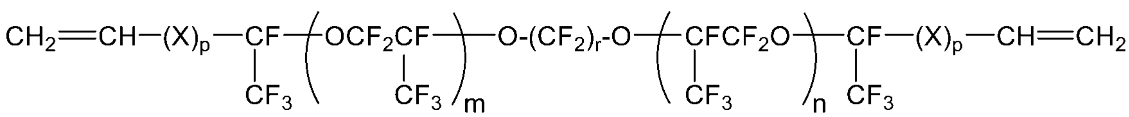

(3)

wherein X represents $-CH_2-$, $-CH_2O-$, $-CH_2OCH_2-$, or $-Y-NR^1-CO-$, provided that Y represents $-CH_2-$ or a group represented by the following structural formula (Z) and $R^1$ represents a hydrogen atom, a methyl group, a phenyl group, or an allyl group; X' represents $-CH_2-$, $-OCH_2-$, $-CH_2OCH_2-$, or $-CO-NR^2-Y'-$, provided that Y' represents $-CH_2-$ or a group represented by the following structural formula (Z') and $R^2$ represents a hydrogen atom, a methyl group, a phenyl group, or an allyl group; and "p" independently represents 0 or 1, "r" represents an integer of 2 to 6, and "m" and "n" each independently represent an integer, and $m \geq 1$, $n \geq 1$, and $2 \leq m+n \leq 200$:

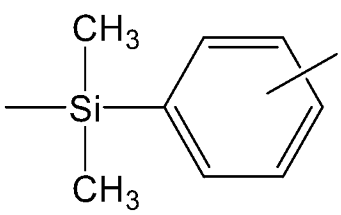

(Z)

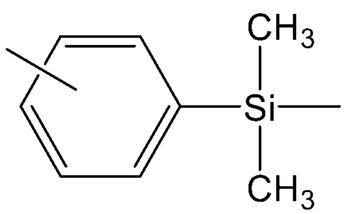

(Z')

[3]: The curable perfluoropolyether gel composition according to [1] or [2],

wherein the perfluoropolyether compound as the component (B) is comprised wherein $Rf^1$ in the general formula (1) is represented by

$$F\text{-}[CF(CF_3)CF_2O]_w\text{-}CF(CF_3)\text{-}$$

wherein "w" represents an integer of 1 to 200; or
wherein the perfluoropolyether compound as the component (B) is comprised wherein $Rf^2$ in the general formula (2) is represented by

$$\text{-}CF(CF_3)\text{-}[OCF_2CF(CF_3)]_m\text{-}O(CF_2)_rO\text{-}[CF(CF_3)CF_2O]_n\text{-}CF(CF_3)\text{-}$$

wherein "r" represents an integer of 2 to 6, "m" and "n" each independently represent an integer, and $m \geq 1$, $n \geq 1$, and $2 \leq m+n \leq 200$.

[4]: The curable perfluoropolyether gel composition according to any one of [1] to [3], further comprising a polyfluoromonoalkenyl compound represented by the following general formula (4) as a component (E),

$$Rf^3\text{-}(X^2)_{p'}\text{-}CH{=}CH_2 \qquad (4)$$

wherein $X^2$ represents $-CH_2-$, $-OCH_2-$, $-CH_2OCH_2-$, or $-CO\text{-}NR^2\text{-}Y^2-$, provided that $Y^2$ represents $-CH_2-$ or a group represented by the following structural formula ($Z^2$):

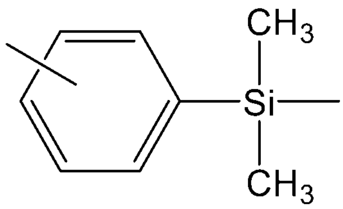
($Z^2$)

(a dimethylphenylsilylene group represented at an ortho-, meta-, or para-position)
wherein $R^2$ represents a hydrogen atom, a methyl group, a phenyl group, or an allyl group, and "p'" represents 0 or 1, and $Rf^3$ represents a perfluoropolyether structure represented by a general formula $F\text{-}[CF(CF_3)CF_2O]_{w'}\text{-}CF(CF_3)\text{-}$, wherein "w'" represents an integer of 1 to 300.

[5]: The curable perfluoropolyether gel composition according to any one of [1] to [4], wherein the component (D) is a catalyst that is activated by heat or light.
[6]: A perfluoropolyether gel cured product, obtained by curing the curable perfluoropolyether gel composition according to any one of [1] to [5].
[7]: The perfluoropolyether gel cured product according to [6], wherein the cured product is used for sealing any one electronic part selected from the group consisting of a gas-pressure sensor, a liquid-pressure sensor, a temperature sensor, a humidity sensor, a rotation sensor, a G sensor, a timing sensor, an air-flow mater, an electronic circuit, a computer control unit, a voice coil motor, and a semiconductor module.
[8]: An electronic part sealed with the perfluoropolyether gel cured product according to [6].
[9]: The electronic part according to [8], wherein the electronic part is any one selected from the group consisting of a gas-pressure sensor, a liquid-pressure sensor, a temperature sensor, a humidity sensor, a rotation sensor, a G sensor, a timing sensor, an air-flow mater, an electronic circuit, a computer control unit, a voice coil motor, and a semiconductor module.

Noted that the present invention is not limited to the above-described embodiments. The embodiments are just examples, and any examples that substantially have the same features and demonstrate the same functions and effects as those in the technical concept described in claims of the present invention are included in the technical scope of the present invention.

## Claims

1. A curable perfluoropolyether gel composition comprising the following components (A) to (D):

(A) a perfluoropolyether compound having at least two alkenyl groups in one molecule and having a perfluoropolyether structure containing a repeating unit of $-C_aF_{2a}O-$ in a main chain, wherein "a" represents an integer of 1 to 6, in an amount of 10 to 90 parts by mass;

(B) a perfluoropolyether compound having no alkenyl group in a molecule, that is at least one selected from compounds represented by the following general formulae (1) and (2), in an amount of 10 to 90 parts by mass, provided that a total amount of the component (A) and the component (B) is 100 parts by mass,

$$Rf^1\text{-}C(=O)\text{-}NR_1R_2 \qquad (1)$$

$$R_2R_1N\text{-}C(=O)\text{-}Rf^2\text{-}C\ (=O)\text{-}NR_1R_2 \qquad (2)$$

wherein $Rf^1$ represents a monovalent perfluoropolyether group, wherein $Rf^2$ represents a divalent perfluoropolyether group, and wherein $R_1$ represents a hydrogen atom or an unsubstituted or substituted monovalent hydrocarbon group having 1 to 15 carbon atoms and having no alkenyl group, and $R_2$ represents an unsubstituted or substituted monovalent hydrocarbon group having 1 to 15 carbon atoms and having no alkenyl group;

(C) an organohydrogen polysiloxane having at least two hydrogen atoms bonded to a silicon atom in one molecule, in an effective curing amount; and

(D) a hydrosilylation reaction catalyst, in a catalytic amount.

**2.** The curable perfluoropolyether gel composition according to claim 1, wherein the component (A) is a perfluoropolyether compound represented by the following general formula (3):

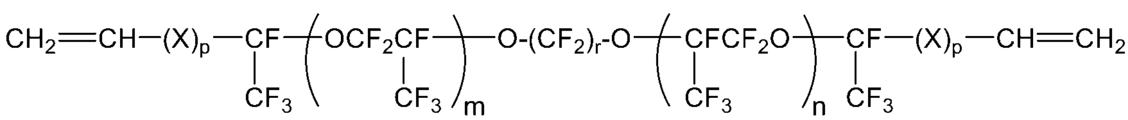

(3)

wherein X represents $-CH_2-$, $-CH_2O-$, $-CH_2OCH_2-$, or - $Y\text{-}NR^1\text{-}CO-$, provided that Y represents $-CH_2-$ or a group represented by the following structural formula (Z) and $R^1$ represents a hydrogen atom, a methyl group, a phenyl group, or an allyl group; X' represents $-CH_2-$, $-OCH_2-$, - $CH_2OCH_2-$, or $-CO\text{-}NR^2\text{-}Y'-$, provided that Y' represents - $CH_2-$ or a group represented by the following structural formula (Z') and $R^2$ represents a hydrogen atom, a methyl group, a phenyl group, or an allyl group; and "p" independently represents 0 or 1, "r" represents an integer of 2 to 6, and "m" and "n" each independently represent an integer, and $m \geq 1$, $n \geq 1$, and $2 \leq m+n \leq 200$:

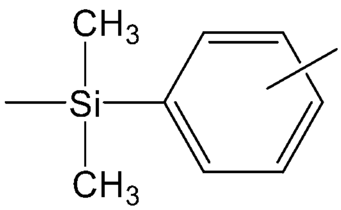

(Z)

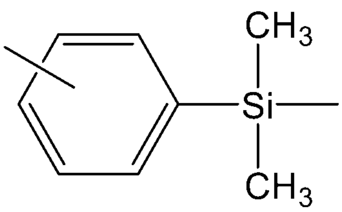

(Z')

**3.** The curable perfluoropolyether gel composition according to claim 1,

wherein the perfluoropolyether compound as the component (B) is comprised wherein $Rf^1$ in the general formula (1) is represented by

$$F-[CF(CF_3)CF_2O]_w-CF(CF_3)-$$

wherein "w" represents an integer of 1 to 200; or
wherein the perfluoropolyether compound as the component (B) is comprised wherein $Rf^2$ in the general formula (2) is represented by

$$-CF(CF_3)-[OCF_2CF(CF_3)]_m-O(CF_2)_rO-[CF(CF_3)CF_2O]_n-CF(CF_3)-$$

wherein "r" represents an integer of 2 to 6, "m" and "n" each independently represent an integer, and $m \geq 1$, $n \geq 1$, and $2 \leq m+n \leq 200$.

**4.** The curable perfluoropolyether gel composition according to claim 1, further comprising a polyfluoromonoalkenyl compound represented by the following general formula (4) as a component (E),

$$Rf^3-(X^2)_p-CH=CH_2 \qquad (4)$$

wherein $X^2$ represents $-CH_2-$, $-OCH_2-$, $-CH_2OCH_2-$, or - $CO-NR^2-Y^2-$, provided that $Y^2$ represents $-CH_2-$ or a group represented by the following structural formula ($Z^2$):

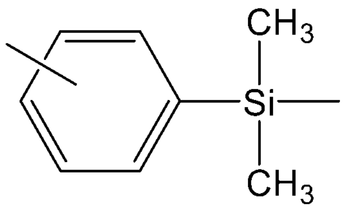

($Z^2$)

(a dimethylphenylsilylene group represented at an ortho-, meta-, or para-position)
wherein $R^2$ represents a hydrogen atom, a methyl group, a phenyl group, or an allyl group, and "p'" represents 0 or 1, and $Rf^3$ represents a perfluoropolyether structure represented by a general formula $F-[CF(CF_3)CF_2O]_{w'}-CF(CF_3)-$, wherein "w'" represents an integer of 1 to 300.

**5.** The curable perfluoropolyether gel composition according to claim 1, wherein the component (D) is a catalyst that is activated by heat or light.

**6.** A perfluoropolyether gel cured product, obtained by curing the curable perfluoropolyether gel composition according to any one of claims 1 to 5.

**7.** The perfluoropolyether gel cured product according to claim 6, wherein the cured product is used for sealing any one electronic part selected from the group consisting of a gas-pressure sensor, a liquid-pressure sensor, a temperature sensor, a humidity sensor, a rotation sensor, a G sensor, a timing sensor, an air-flow mater, an electronic circuit, a computer control unit, a voice coil motor, and a semiconductor module.

**8.** An electronic part sealed with the perfluoropolyether gel cured product according to claim 6.

**9.** The electronic part according to claim 8, wherein the electronic part is any one selected from the group consisting of a gas-pressure sensor, a liquid-pressure sensor, a temperature sensor, a humidity sensor, a rotation sensor, a G sensor, a timing sensor, an air-flow mater, an electronic circuit, a computer control unit, a voice coil motor, and a semiconductor module.

[FIG. 1]

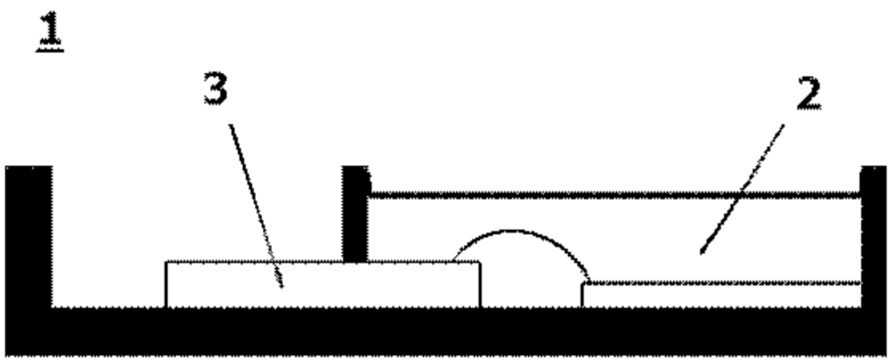

# INTERNATIONAL SEARCH REPORT

International application No.
**PCT/JP2024/009092**

## A. CLASSIFICATION OF SUBJECT MATTER

***C08L 71/00***(2006.01)i; ***C08L 71/02***(2006.01)i; ***C08L 83/05***(2006.01)i
FI: C08L71/00 B; C08L71/02; C08L83/05

According to International Patent Classification (IPC) or to both national classification and IPC

## B. FIELDS SEARCHED

Minimum documentation searched (classification system followed by classification symbols)

C08L1/00-101/16; C09D1/00-201/10; C09J1/00-201/10; H01L23/28-23/31

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

## C. DOCUMENTS CONSIDERED TO BE RELEVANT

| Category* | Citation of document, with indication, where appropriate, of the relevant passages | Relevant to claim No. |
|---|---|---|
| X | JP 2017-190389 A (SHIN-ETSU CHEMICAL CO., LTD.) 19 October 2017 (2017-10-19) claims, paragraph [0084], columns of examples, for example, example 1, etc. | 1-9 |
| X | WO 2023/276779 A1 (SHIN-ETSU CHEMICAL CO., LTD.) 05 January 2023 (2023-01-05) claims, columns of examples, for example, examples 3, 7, etc. | 1-9 |
| A | JP 2005-330434 A (SHIN-ETSU CHEMICAL CO., LTD.) 02 December 2005 (2005-12-02) | 1-9 |
| A | JP 2006-22223 A (SHIN-ETSU CHEMICAL CO., LTD.) 26 January 2006 (2006-01-26) | 1-9 |
| A | JP 2004-43590 A (SHIN-ETSU CHEMICAL CO., LTD.) 12 February 2004 (2004-02-12) | 1-9 |
| A | JP 2010-189602 A (SHIN-ETSU CHEMICAL CO., LTD.) 02 September 2010 (2010-09-02) | 1-9 |
| A | JP 2012-25924 A (SHIN-ETSU CHEMICAL CO., LTD.) 09 February 2012 (2012-02-09) | 1-9 |
| A | US 2012/0129979 A1 (DUBROVSKAYA-VINOKUROVA, Galina) 24 May 2012 (2012-05-24) | 1-9 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **16 May 2024** | **28 May 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

INTERNATIONAL SEARCH REPORT

International application No.
**PCT/JP2024/009092**

**C. DOCUMENTS CONSIDERED TO BE RELEVANT**

| Category* | Citation of document, with indication, where appropriate, of the relevant passages | Relevant to claim No. |
|---|---|---|
| P, A | WO 2023/140134 A1 (SHIN-ETSU CHEMICAL CO., LTD.) 27 July 2023 (2023-07-27) | 1-9 |

Form PCT/ISA/210 (second sheet) (July 2022)

**INTERNATIONAL SEARCH REPORT**
**Information on patent family members**

International application No.
**PCT/JP2024/009092**

| Patent document cited in search report | Publication date (day/month/year) | Patent family member(s) | Publication date (day/month/year) |
|---|---|---|---|
| JP 2017-190389 A | 19 October 2017 | CN 107286891 A<br>KR 10-2017-0117323 A | |
| WO 2023/276779 A1 | 05 January 2023 | CN 117597394 A<br>TW 202328281 A | |
| JP 2005-330434 A | 02 December 2005 | (Family: none) | |
| JP 2006-22223 A | 26 January 2006 | US 2006/0014895 A1<br>EP 1614718 A1 | |
| JP 2004-43590 A | 12 February 2004 | US 2004/0014889 A1<br>EP 1380610 A1 | |
| JP 2010-189602 A | 02 September 2010 | (Family: none) | |
| JP 2012-25924 A | 09 February 2012 | (Family: none) | |
| US 2012/0129979 A1 | 24 May 2012 | (Family: none) | |
| WO 2023/140134 A1 | 27 July 2023 | TW 202336153 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 4098699 B
- JP 6020327 B